# EUROPÄISCHE PATENTSCHRIFT

(11) **EP 4 331 112 B1**
(45) Veröffentlichungstag und Bekanntmachung des Hinweises auf die Patenterteilung: **21.05.2025**
(21) Anmeldenummer: 22726665.7
(22) Anmeldetag: 29.04.2022
(51) Int. Cl.: H02S 20/10, F24S 25/50, F24S 20/67, F24S 25/10, F24S 25/60

(54) **TRAGSTRUKTUR FÜR PV-MODULE**
SUPPORT STRUCTURE FOR PV MODULES
STRUCTURE DE SUPPORT POUR MODULES PHOTOVOLTAÏQUES

(30) Priorität: 29.04.2021 DE 102021111106
(43) Veröffentlichungstag der Anmeldung: 06.03.2024
(73) Patentinhaber: SBP Sonne GmbH, 70197 Stuttgart (DE)
(72) Erfinder: BALZ, Markus, 72649 Wolfschlugen (DE); BOHN, Matthis, 70178 Stuttgart (DE); FRANK, Martin, 70180 Stuttgart (DE); DILLMANN, Uli, 70197 Stuttgart (DE)
(74) Vertreter: DREISS Patentanwälte PartG mbB
(86) Internationale Anmeldenummer: PCT/EP2022/061581
(87) Internationale Veröffentlichungsnummer: WO 2022/229439

(56) Entgegenhaltungen:
- EP-A1- 3 772 818
- WO-A1-2010/103378
- WO-A1-2014/129800
- KR-A- 20200 009 277
- KR-B1- 101 004 108
- US-A1- 2008 168 981
- US-A1- 2010 089 433

## Beschreibung

Die Erfindung betrifft eine Anlage zur Erzeugung von elektrischer Energie mittels Photovoltaik (PV) auf einer auch anderweitig genutzten Fläche. Zum Beispiel soll die PV-Anlage auf einem Parkplatz für Kraftfahrzeuge oder einer landwirtschaftlich genutzten Fläche aufgestellt werden könne, so dass unter den PV-Modulen beispielsweise Kraftfahrzeuge parken oder Landwirtschaft betrieben wird**.**

Photovoltaikanlagen, die auf einem Parkplatz für Kraftfahrzeuge oder einer landwirtschaftlich genutzten Fläche aufgestellt und betrieben werden sollen, müssen verschiedene technische und wirtschaftliche Rahmenbedingungen erfüllen. Insbesondere müssen sie kostengünstig sein, relativ leicht zu errichten sein und möglichst wenig Baumaterial benötigen. Natürlich müssen sie auch bei hohen Windlasten, wie z.B. Sturmböen, eine ausreichende Steifigkeit aufweisen.

Aus der KR 2020 0009277 A und der KR 101 004 108 B1 sin PV-Anlagen bekannt bei denen Spannseile über Traversen gespannt sind. An diesen Spannseilen werden die PV-Module befestigt.

Alle Bauwerke, deren Haupt-Abmessungen (Länge, Bereite) bezogen auf die Dicke ihrer tragenden Struktur sehr groß sind, neigen zu Schwingungen, die beispielsweise durch Windböen angeregt werden. Es ist daher sicherzustellen, dass Schwingungen der Tragstruktur bzw. der PV-Anlage nicht auftreten bzw. die Amplituden dieser Schwingungen so klein bleiben, dass keine Schäden an der Tragstruktur und den PV-Modulen auftreten. Dabei ist zu berücksichtigen, dass die PV-Module überwiegend aus dem spröden Werkstoff "Glas" bestehen.

Diese Aufgaben werden erfindungsgemäß gelöst durch eine Tragstruktur für Photovoltaikmodule, umfassend mehrere nebeneinander verlaufende Reihen von Stützen und mehrere nebeneinander verlaufende Spannbänder, wobei die Stützen einer Reihe durch jeweils eine Traverse miteinander verbunden sind, wobei die Spannbänder quer zu den Traversen verlaufen und wobei an den Spannbändern Photovoltaikmodule angeordnet sind und wobei die aus Stahlblech bestehenden Spannbänder an den Kreuzungspunkten von einer Traverse und einem Spannband an der Traverse mittels einer Schraubverbindung oder einer Klemmverbindung befestigt sind.

Die erfindungsgemäße Tragstruktur umfasst also eine Vielzahl von teilweise sehr langen Reihen von Traversen. Zwischen diesen Traversen sind Spannbänder angeordnet, die an und für sich biegeschlaff sind. Durch eine ausreichende Vorspannung erreichen die Spannbänder eine ausreichende Steifheit. Die Vorspannkraft in den Spannbändern wird durch aeroelastische Windkanaluntersuchungen sowie computergestützte Simulationen so bestimmt, dass sich ein wirtschaftliches Optimum bei gleichzeitiger Reduktion der aerodynamischen Effekte - Schwingungen - ergibt. Die Vorspannung hängt damit auch von dem Standort der PV-Anlage ab. An einem windreichen Standort ist eine größere Vorspannung erforderlich als an einem Standort mit geringen maximalen Windgeschwindigkeiten.

Die von der Vorspannung verursachte Dehnung der Spannbänder ist so groß, dass zu jedem Zeitpunkt aber auch in im Falle einer windinduzierten Schwingung an jedem Punkt der Schwingung die Vorspannung größer als null ist. Das gilt auch für den sehr kurzen Moment, wenn ein schwingendes Spannband perfekt horizontal ausgerichtet ist und nicht durchhängt. In diesem Moment, der auch als "Nulldurchgang" der Schwingungsamplitude bezeichnet werden kann, ist die (gedehnte) Länge des Spannbands minimal, weil es die kürzeste Verbindung zwischen zwei benachbarten Auflagerpunkten "einnimmt". Auch dann ist noch eine gewisse Vorspannung vorhanden.

An diesen Spannbändern werden die PV-Module befestigt. Die erfindungsgemäße Konstruktion ist extrem leicht, kostengünstig und trotzdem sehr belastbar.

Die Stützen der erfindungsgemäßen Tragstruktur sind so lang, dass die Traversen und die Spannbänder samt den darauf befestigten PV-Modulen eine Höhe über dem Grund von zum Beispiel 5 oder 6 Metern haben. Sie können daher nicht von einem Fahrzeug, das beispielsweise auf einem unter den PV-Modulen angelegten Parkplatz abgestellt wird, berührt und beschädigt werden. Entsprechendes gilt, wenn die erfindungsgemäße Tragstruktur im Zusammenhang mit landwirtschaftlich genutzten Flächen errichtet wird. Dann muss die lichte Höhe der Traversen, aber auch der Spannbänder, so bemessen sein, dass die zum Bewirtschaften der landwirtschaftlichen Fläche benötigten Maschinen und Fahrzeuge zumindest unter den Spannbändern hindurchfahren können. Das ist in der Regel ausreichend. In manchen Fällen ist es auch erwünscht, wenn man auch unter den Traversen hindurchfahren kann.

Die Hauptabmessungen einer solchen Tragstruktur, nämlich Länge und Breite der von der Tragstruktur überspannten Grundfläche, können weit über 100 m betragen, so dass eine Peak-Leistung von weit mehreren Megawatt [MWₚₑₐₖ] installiert werden kann. Allerdings ist eine solche lange und breite/großflächige Struktur auch empfindlich gegenüber aerolastischen Schwingungen, die durch Windlasten angeregt werden. Die Amplituden dieser für die PV-Module gefährlichen Schwingungen können durch eine ausreichende Vorspannung der Spannbänder auf ein unschädliches Maß reduziert werden.

Eine besonders vorteilhafte, wirtschaftliche und leistungsfähige Ausgestaltung sieht vor, dass die Spannbänder aus korrosionsgeschütztem Stahlblech bestehen, und dass in den Spannbändern Durchbrüche vorhanden sind, um PV-Module an dem Spannband zu befestigen und/oder die Spannbänder an den Kreuzungspunkten zwischen einer Traverse und einem Spannband an der Traverse zu befestigen.

Das Spannband kann beispielsweise aus einem hochfesten Stahlblech mit einer Dicke von 2 bis 4 mm, bevorzugt von 3 mm, und einer Breite von 50 mm bis 150 mm bestehen. Dadurch ergibt sich eine ausreichend hohe Zugfestigkeit, um die erforderliche Vorspannung aufzubringen. Trotzdem kann das Spannband, weil es relativ dünn ist, gut auf einer Spule/Haspel aufgewickelt werden und auf diese Weise zum Aufstellungsort transportiert werden. Zur Montage des Spannbands wird eine solche Spule oder Haspel über die Traversen geführt und dabei abgewickelt. Anschließend liegt das Spannband (noch ohne Vorspannung) über den Traversen. In einem darauffolgenden Schritt wird die erforderliche Vorspannung aufgebracht.

Wenn die Spannbänder aus einem "endlosen" Streifen eines hochfesten Stahlblechs hergestellt werden, dann können an den geeigneten Stellen Durchbrüche (kreisrunde Löcher, Langlöcher oder anders geformte Durchbrüche) durch Stanzen, Laserschneiden oder auf andere Weise in das Spannband eingebracht werden. Mit Hilfe dieser Durchbrüche ist es dann sehr einfach möglich, mehrere PV-Module an den Spannbändern, beispielsweise mit Hilfe von Klemmstücken, zu befestigen. Das Gleiche gilt für die Verbindung zwischen Spannband und den Traversen an den Kreuzungspunkten zwischen Spannband und Traverse.

Auf diese Weise kann die Vorfertigung der einzelnen Bauteile (und Traversen) sehr weitgehend in der Werkstatt erfolgen und die derartig vorbereiteten Bauteile können dann vor Ort auf einfache Weise montiert werden.

Selbstverständlich sind auch alternative Formen von Spannbändern möglich, nämlich Stahlseile, Faserseile aus nicht-metallischen Fasern, wie Glasfasern, Kohlenstofffasern oder Aramidfasern oder Mischungen dieser Faserwerkstoffe.

Die Spannbänder sind zumeist an den Kreuzungspunkten einer Traverse an der Oberseite einer Traverse, bevorzugt durch eine Klemmung bzw. einen Reib- oder Kraftschluss, befestigt. Dadurch tritt keine Kerbwirkung auf und das Abheben des Spannbands von der Traverse, **z.B.** infolge einer Windböe, wird wirksam verhindert.

Alternativ können die Spannbänder auch an der Unterseite der Traversen vorbeigeführt und befestigt werden. Das kann die Errichtung der Tragstruktur vereinfachen. Dabei werden die Spannbänder unter den Traversen ausgerollt und dann hochgezogen.

Außerdem bewirkt die Klemmung der Spannbänder an den Kreuzungspunkt eine Aussteifung zwischen den benachbarten Traversen, so dass insgesamt die Tragstruktur stabilisiert und ausgesteift wird.

Um ein Abknicken oder eine erhöhte Biegespannung in dem Spannband zu verhindern, ist mindestens an den Kreuzungspunkten einer Traverse und eines Spannbands die Oberseite der Traverse konvex gekrümmt und das Spannband liegt auf der gekrümmten Oberseite der Traverse auf. Es ist sowohl möglich, diese Krümmung als integralen Bestandteil der Traverse auszubilden, indem ein Rohr oder ein geschweißtes Hohlprofil aus Stahlblechen hergestellt wird, dessen Oberseite die gewünschte Krümmung aufweist. Es ist aber auch möglich, die Traversen beispielsweise als Vierkantrohr auszubilden und immer dort, wo die Spannbänder über die Traverse laufen, einen Sattel aufzusetzen und mit der Traverse zu verschrauben bzw. zu verbinden, wobei der Sattel die gewünschte Krümmung aufweist.

Die Traversen können auch aus einem nachwachsenden Rohstoff, insbesondere Holz (z. B. Konstruktions-Vollholz) hergestellt werden. Auch dann ist es vorteilhaft, die Krümmung an den Oberseiten der Traversen z. B**.** durch einen Profilfräser direkt in den Traversen herzustellen.

Die Ausführungsform mit aufgesetzten Sattelstücken ist in manchen Fällen besonders wirtschaftlich in der Fertigung, weil die Traversen dann aus handelsüblichen am Markt verfügbaren Stahlrohren oder Kanthölzern, sei es mit rundem oder quadratischem oder rechteckigem Querschnitt, ausgebildet sein können. Die Sattelstücke werden dann auf diese Traversen aufgesetzt und beispielsweise mit Spannschrauben an den Traversen festgeklemmt. Das erleichtert unter anderem den Transport der Einzelteile zur Baustelle. Vor Ort werden die Sattelstücke dann montiert.

Alternativ ist es auch möglich, dass die Spannbänder aus einzelnen Abschnitten zusammengesetzt werden und sich jeweils ein Abschnitt zwischen zwei benachbarten Traversen erstreckt. Das eine Ende des Spannbandabschnitts wird dann an einer Traverse befestigt und das gegenüberliegende Ende des Spannbandabschnitts wird dann an der benachbarten Traverse befestigt. Bei dieser Konstruktion können z.B**.** Befestigungslaschen an den Traversen an den geeigneten Punkten angeschweißt oder in Form von Halbschalen an den Traversen festgeklemmt werden. Die Abschnitte werden dann auf Maß geschnitten und vorgespannt zwischen den Traversen eingebaut.

Es ist auch möglich, dass ein Abschnitt eines Spannbands sich über zwei oder mehr Traversen erstreckt. Dann können auch sehr große Tragstrukturen wirtschaftlich hergestellt werden.

Mehrere hintereinander angeordnete Spannbandabschnitte bilden ein durchgehendes Spannband, das sich von einer ersten Traverse bis zu einer letzten Traverse erstreckt. Für die Steifigkeit der erfindungsgemäßen Tragstruktur ist es ohne Bedeutung, ob das Spannband einstückig ausgebildet ist oder aus mehreren Spannbandabschnitten besteht, die hintereinander angeordnet sind und die gleiche Wirkung entfalten wie ein durchgehendes Spannband.

Um die zur Vorspannung der Spannbänder aufzubringenden Spannkräfte von der ersten Traverse und der letzten Traverse abzuleiten, sind mindestens zwei Fundamente vorgesehen. Ein erstes Fundament verläuft im Wesentlichen parallel zur ersten Traverse und ein zweites Fundament verläuft parallel zur letzten Traverse. In der Regel sind diese Fundamente außerhalb des von der erfindungsgemäßen Tragstruktur überdeckten Bereichs angeordnet. Dann können durch geeignete Zugmittel die Vorspannkräfte auf einfache Weise von der ersten Traverse in das erste Fundament abgeleitet werden und die Vorspannkräfte der Spannbänder von der letzten Traverse in das zweite Fundament abgeleitet werden.

Die Fundamente müssen die Vorspannkräfte der Spannbänder aufnehmen und in das Erdreich einleiten. Sie können als Streifen- oder Punktfundament ausgebildet sein. Sie können auch aus Mikropfählen und/oder Verpressankern gebildet werden. Die Punktfundamente, Mikropfähle und/oder Verpressanker sind in Reihen parallel zu der ersten bzw. letzten Traverse im Erdreich angeordnet. Dann kann beispielsweise mit Hilfe geeigneter Zugmittel (z.B**.** ein Stahlseil) eine Verbindung zwischen der ersten Traverse und dem ersten Fundament hergestellt werden. Selbstverständlich ist es erforderlich, dass über die gesamte Länge der Traverse, die, wie bereits erwähnt, 100 m oder mehr betragen kann, mehrere Zugmittel vorgesehen sind, welche die über die gesamte Länge der Traverse auftretenden Vorspannkräfte in das erste Fundament einleiten. Entsprechendes gilt selbstverständlich auch für das zweite Fundament und die letzte Traverse.

Die von den Spannbändern überspannte Fläche wird in der Regel nicht komplett mit PV-Modulen belegt. Eine nur teilweise Belegung kann folgende Vorteile mit sich bringen:
Die aus Windlasten resultierenden Staudrücke und aerodynamischen Überhöhungen können durch eine nur teilweise Belegung verringert werden. Manchmal ist auch eine unregelmäßige Belegung der Spannbänder mit PV-Modulen vorteilhaft, um die Amplituden der windinduzierten Schwingungsanregungen der Tragstruktur zu verringern. Diese Fragen werden durch Windkanaluntersuchungen und/oder Simulationsrechnungen geklärt.

Bei einer Anwendung über Agrarflächen werden die Anordnung der PV-Module und der Bedeckungsgrad durch die auf der Agrarfläche wachsenden Pflanzen und deren Eigenschaften definiert. Es kann unter diesem Gesichtspunkt vorteilhaft sein, die PV-Module in einer Vielzahl von in sich geschlossenen Teilflächen anzuordnen, wobei zwischen den Teilflächen ein gewisser Abstand vorgesehen ist, so dass ausreichend Sonnenlicht auf die Pflanzen fällt und der Schattenwurf, bzw. die Dauer der Abschattung durch eine der Teilflächen möglichst gleich verteilt ist. Dazu können die Teilflächen in der Art eines Schachbrettmusters verteilt sein.

Erfindungsgemäß kann vorgesehen sein, dass die Spannbänder einen Abstand zueinander aufweisen, der in etwa der Länge der zu montierenden PV-Module entspricht. Dann nämlich können die PV-Module mit ihren kurzen Seiten auf zwei benachbarten Spannbändern aufliegen und dort mit dem Spannband, beispielsweise durch Klemmelemente oder eine Schraubverbindung, befestigt werden. Dabei ist es möglich, dass entweder die PV-Module auf Stoß angeordnet werden oder, ähnlich wie bei einem Schindeldach, teilweise überlappend angeordnet sind.

Alternativ kann auch vorgesehen sein, dass die Spannbänder einen Abstand zueinander aufweisen, der in etwa der Breite der zu montierenden PV-Module entspricht. Dann nämlich können die PV-Module mit ihren langen Seiten auf zwei benachbarten Spannbändern aufliegen und dort mit dem Spannband, beispielsweise durch Klemmelemente oder eine Schraubverbindung, befestigt werden. Eine kurze Spannweite kann besonders bei sogenannten Glas-Glas-PV-Modulen vorteilhaft sein. Dabei ist es möglich, dass entweder die PV-Module auf Stoß angeordnet werden oder, ähnlich wie bei einem Schindeldach, teilweise überlappend angeordnet sind.

Es ist bei der erfindungsgemäßen Tragstruktur alternativ möglich, die PV-Module ohne Rahmen direkt auf den Spannbändern mit Hilfe geeigneter Klemmelemente und Dichtleisten anzuordnen. Diese Ausführungsform ist besonders leicht und kostengünstig und bietet dem Wind weniger Angriffsfläche, weil die PV-Module noch niedriger bauen als PV-Module, die von einem (Aluminium-)Rahmen umgeben sind. Es ist aber auch möglich, PV-Module mit einem Rahmen auf der erfindungsgemäßen Tragstruktur einzusetzen. Dann wird das PV-Modul über den Rahmen mit den Spannbändern verbunden. Diese Ausführungsform ist etwas robuster, allerdings sind die Baukosten höher und die Angriffsfläche für den Wind ist größer.

Es ist selbstverständlich auch möglich, eine Kombination aus PV-Modulen mit und ohne Rahmen einzusetzen. Dadurch können die Vorteile beider Ausführungsformen miteinander verbunden werden.

Um sicherzustellen, dass eventuell auftretender Regen nicht in unkontrollierter Weise auf die Fahrzeuge oder die darunter befindliche landwirtschaftliche Fläche gelangt, sind zwischen benachbarten PV-Modulen Dichtungen vorgesehen. Dadurch wird das auftreffende Regenwasser z.B**.** mit Hilfe einer Regenrinne gesammelt und kontrolliert einer weiteren Verwendung zugeführt werden. Beispielsweise kann es in einem Regenwasserspeicher gesammelt werden und später zum Wässern der dort wachsenden Pflanzen eingesetzt werden.

In einer weiteren vorteilhaften Ausgestaltung der Erfindung sind die Traversen aus einem Breitflanschträger, einem Hohlprofil, insbesondere einem Stahlrohr, oder aus Holz, insbesondere aus Konstruktionsvollholz, hergestellt. Dabei können sowohl die Hohlprofile als auch die Traversen aus Holz einen runden oder polygonalen Querschnitt aufweisen.

In weiterer vorteilhafter Ausgestaltung sind mindestens die Oberseiten der Traversen gekrümmt und bilden ein Auflager für die Spannbänder.

In einer bevorzugten Ausgestaltung der Erfindung ist an den Kreuzungspunkten jeweils ein Sattelstück für ein Spannband vorgesehen, wobei die Sattelstücke mit den Traversen verbunden sind. Die Sattelstücke können mit den Traversen verschraubt sein oder an den Traversen festgeschweißt werden. Die zweite Alternative ist natürlich nur dann möglich, wenn die Traversen aus einem schweißbaren Metall, insbesondere Stahl, bestehen.

Es ist weiter vorteilhaft, wenn jedes Sattelstück eine gekrümmte Auflage und ein Gegenstück aufweist, wobei das Spannband zwischen der Auflage und dem Gegenstück hindurchgeführt wird und das Gegenstück mittels Klemmschrauben gegen die Auflage gepresst wird. Dann ist es möglich, das Spannband im Bereich des Sattelstücks durch eine Klemmverbindung reibschlüssig mit dem Sattelstück und damit auch der Traverse zu verbinden. Durch die gekrümmte Auflage ist sichergestellt, dass das Spannband auch wenn es im Betrieb Schwingungen ausgesetzt ist, nie abgeknickt wird, so dass eine Kerbwirkung im Bereich der Auflage sicher vermieden wird.

Wenn das Klemmstück und die zugehörigen Klemmschrauben ausreichend dimensioniert sind, dann ist es möglich, das Spannband an den Kreuzungspunkten ausschließlich reibschlüssig durch die Klemmstücke mit dem Sattelstück und der Traverse zu verbinden. Durchbrüche in den Spannbändern sind dann nicht erforderlich, das hat Vorteile in der Werkstoffausnutzung und verringert die Gefahr von Spannungskonzentrationen im Bereich der Durchbrüche, die eine potentielle Versagensquelle darstellen können.

In einer vorteilhaften Ausgestaltung ist vorgesehen, dass die Sattelstücke ein oder zwei Rippen umfassen, dass die Auflage an der oder den Rippen befestigt ist, bevorzugt durch Schweißen, dass unterhalb der Auflage eine Grundplatte an der oder den Rippen angeordnet ist, und dass die Grundplatte Durchbrüche oder Gewindebohrungen aufweist, die mit den Klemmschrauben und den Klemmstücken zusammenwirken.

Diese Ausführungsform der Sattelstücke ist bevorzugt als Schweißkonstruktion ausgebildet. Sie erlaubt es, die Sattelstücke auf herkömmliche Hohlprofile aufzusetzen und an der gewünschten Stelle festzuschweißen. Die Grundplatte erstreckt sich quer unter der Auflagefläche durch das Sattelstück hindurch und ragt auf beiden Seiten über die Auflage hinaus, so dass es mit einem entsprechend dimensionierten Klemmstück möglich ist, das Spannband zwischen dem Klemmstück und der Auflage hindurchzuführen und das Klemmstück mithilfe der Klemmschrauben an die Grundplatte anzupressen. Auf diese Weise wird der Reibschluss zwischen Spannband und Sattelstück hergestellt.

Weil es sich bei diesem Ausführungsbeispiel um eine Schweißkonstruktion handelt, können alle Bauteile hinsichtlich Materialstärke und ihrer Dimensionierung optimal gestaltet werden, so dass sich eine sehr leichte, kostengünstige und trotzdem zuverlässige und sichere Befestigung der Spannbänder an den Kreuzungspunkten realisieren lässt.

Bei der erfindungsgemäßen Tragstruktur kann jedes PV-Modul direkt oder mittelbar an zwei nebeneinander befindlichen Spannbändern angeordnet sein. Wenn die PV-Module einen Rahmen umfassen, dann sind die PV-Module bevorzugterweise über den Rahmen an zwei nebeneinander verlaufenden Spannbändern befestigt. Es ist dann auch ohne weiteres möglich, die PV-Module aufgeständert an den Spannbändern zu befestigen. Aufgeständert meint im Zusammenhang mit der Erfindung, dass ein Normalenvektor der PV-Module und eine Tangente an das Spannband, dort wo das PV-Modul an dem Spannband angeordnet ist, nicht einen Winkel von 90° einschließen, sondern beispielsweise einen Winkel von nur 60° einschließen. Dadurch ist es möglich, die PV-Module optimal auszurichten, so dass sie möglichst viel Solarstrahlung einfangen und ihre Leistungsfähigkeit und Wirtschaftlichkeit verbessert wird.

Es ist bei der aufgeständerten Bauweise bevorzugt, wenn an einem Ende der PV-Module der Rahmen bzw. das PV-Modul direkt an dem Spannband befestigt ist und an dem anderen Ende über eine Strebe der gewünschte Abstand zwischen dem Rahmen des PV-Moduls und dem Spannband hergestellt wird, um auf diese Weise die optimale Ausrichtung des PV-Moduls zu bewirken.

Weitere Vorteile und vorteilhafte Ausgestaltungen der Erfindung sind der nachfolgenden Zeichnung, deren Beschreibung und den Patentansprüchen entnehmbar. Alle in der Zeichnung, deren Beschreibung und den Patentansprüchen offenbarten Merkmale können sowohl einzeln als auch in beliebiger Kombination miteinander erfindungswesentlich sein.

### Zeichnung

### Es zeigen:

Figuren 1 bis 33 verschiedene Ansichten und Ausführungsformen der erfindungsgemäßen Tragstruktur;
Figur 34 das Aufstellen einer erfindungsgemäßen Tragstruktur;
Figuren 35 und 36 Zugmittel mit Tellerfederpaketen und
Figuren 37 und 38 Details einer Ausführungsform mit mehreren hintereinander angeordneten Spannbändern.

### Beschreibung der Ausführungsbeispiele

In den Figuren werden für gleiche Bauteile die gleichen Bezugszeichen verwendet. Nicht in allen Figuren sind alle Bauteile mit Bezugszeichen versehen, um die Übersichtlichkeit zu bewahren.

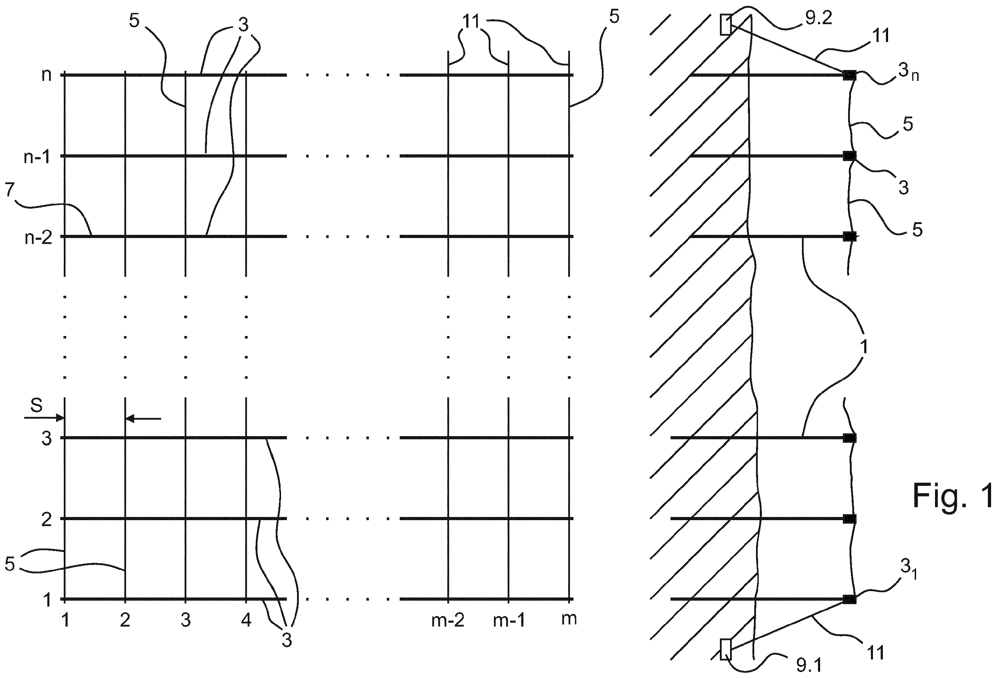

Die Figur 1 zeigt eine Draufsicht und eine Seitenansicht einer erfindungsgemäßen Tragstruktur stark vereinfacht zur Veranschaulichung des grundsätzlichen Aufbaus.

Im linken Teil der Figur 1 ist eine Draufsicht auf die erfindungsgemäße Tragstruktur (ohne PV-Module) dargestellt. Der rechte Teil der Figur 1 zeigt eine Seitenansicht der erfindungsgemäßen Tragstruktur, ebenfalls ohne PV-Module.

Die erfindungsgemäße Tragstruktur besteht aus einer Vielzahl von Stützen 1, die unterhalb der Traversen 3 angeordnet sind. Wie sich aus der Draufsicht der Figur 1 ergibt, sind mehrere Traversen 3 parallel zueinander angeordnet. In dem dargestellten Ausführungsbeispiel sind insgesamt "n" Traversen 3 vorhanden. Die Nummerierung der Traversen 3 von "1" bis "n" ist an der linken Seite der Figur 1 angedeutet.

Auf bzw. an den Traversen 3 sind "m" Spannbänder 5 angeordnet und befestigt. Sie verlaufen parallel zueinander und bei diesem Ausführungsbeispiel in einem rechten Winkel zu den Traversen 3. Ein Abstand s zwischen zwei benachbarten Spannbändern 5 entspricht oftmals einer Länge eines PV-Moduls. Das bedeutet, dass ein PV-Modul (nicht dargestellt) mit einer rechteckigen Grundfläche mit seinen Stirnseiten auf zwei benachbarten Spannbändern 5 aufliegt und dort mit diesen fest verbunden werden kann.

Es ist in der Regel vorteilhaft, wenn die PV-Module so angeordnet werden, dass die langen Seiten der PV-Module auf den Spannbändern 5 aufliegen und dort befestigt werden. weil dadurch die mechanische Belastung auf die PV-Module geringer ist. Die Spannbänder sind bogenförmig, bzw. in Form einer Kettenlinie gekrümmt. Allerdings ist der Krümmungsradius der Kettenlinie aufgrund der Vorspannung extrem groß. Dadurch resultiert aus der Befestigung der PV-Module an den langen Seiten nur eine vernachlässigbare Durchbiegung der PV-Module. In der Seitenansicht der Figur 1 ist die Krümmung der Spannbänder 5 zeichnerisch angedeutet. Sie ist allerdings nicht maßstäblich.

Immer dort, wo ein Spannband 5 eine Traverse 3 kreuzt, entsteht ein Kreuzungspunkt 7, von dem in der Figur 1 nur einer exemplarisch mit einem Bezugszeichen versehen wurde. In Summe gibt es demnach "n" mal "m" Kreuzungspunkte 7**.**

In der Seitenansicht der Figur 1 ist auch zu erkennen, dass die Stützen 1 in das Erdreich hineinragen können, so dass sie fest in dem Erdreich gegründet sind. Das Erdreich ist in der Seitenansicht durch eine Schraffur angedeutet. In einer bevorzugten Ausführungsform werden Rammpfähle in das Erdreich gerammt, deren oberes Ende dann auf Höhe des Parkplatzes/der Agrarfläche endet. Auf die oberen Enden der Rammpfähle werden dann die Stützen aufgesetzt und mit ihnen verbunden.

In der Seitenansicht der Figur 1 sind die erste Traverse 3₁ und die letzte Traverse 3ₙ zu sehen. Außerhalb des von der Tragstruktur überspannten Bereichs befindet sich ein erstes Fundament 9.1 im Erdreich. Dieses erste Fundament 9.1 verläuft parallel zu der ersten Traverse 3.1. Ein zweites Fundament 9.2 ist symmetrisch angeordnet bezogen auf die letzte Traverse 3ₙ.

Um die Vorspannung der "m" Spannbänder 5, die von der ersten Traverse 3.1 und der letzten Traverse 3ₙ aufgebracht werden müssen, in die Fundamente 9.1 bzw. 9.2 ableiten zu können, sind bei diesem Ausführungsbeispiel Zugmittel 11 vorgesehen, welche die im Wesentlichen in horizontaler Richtung verlaufenden Vorspannkräfte umlenken und in die Fundamente 9 einleiten. Die Zugmittel 11 können beispielsweise als Stahlseile, Gewindestangen oder einem sehr dicken Stahldraht mit einem Durchmesser von beispielsweise 30 bis 60 mm bestehen.

In der Draufsicht der Figur 1 sind die Fundamente 9 und die Zugmittel 11 nicht sichtbar, bzw. nur teilweise dargestellt. Die Zugmittel 11 können beispielsweise immer dort an der ersten Traverse 3.1 bzw. der letzten Traverse 3ₙ angeordnet sein, wo ein Spannband 5 an den Traversen 3.1 bzw. 3ₙ befestigt ist. Dann wird die Vorspannkraft direkt von den Spannbändern 5 in die Zugmittel 11 eingeleitet, ohne dass nennenswerte Biegemomente auf die Traverse 3 ausgeübt werden. Diese Anordnung ist rechts oben in der Draufsicht der Figur 1 illustriert.

Eine sehr vorteilhafte und wirtschaftliche Variante sieht vor, dass nur in den Verlängerungen der von den Stützen gebildeten Achsen Zugmittel 11 vorgesehen sind.

Wie bereits erwähnt, sind die Abmessungen der erfindungsgemäßen Tragstruktur durchaus beträchtlich. Eine Länge der Traversen 3 kann mehr als 100 m betragen. In entsprechender Weise kann die Länge der Spannbänder 5 ebenfalls mehr als 100 m betragen, so dass die von der Tragstruktur überdeckte Fläche größer als 1 ha ist. Dementsprechend ist auch die Höhe der Stützen 1 so gewählt, dass zwischen dem Boden und den Spannbändern 5 bzw. den Traversen 3 eine lichte Höhe von mindestens 4 m, oftmals aber auch von 5 Metern oder mehr vorhanden ist.

Dadurch können Fahrzeuge, insbesondere auch große Traktoren und Anhänger, unter den Spannbändern 5 bzw. den darauf befindlichen PV-Modulen hindurchfahren, ohne dass es zu einem Kontakt kommen kann.

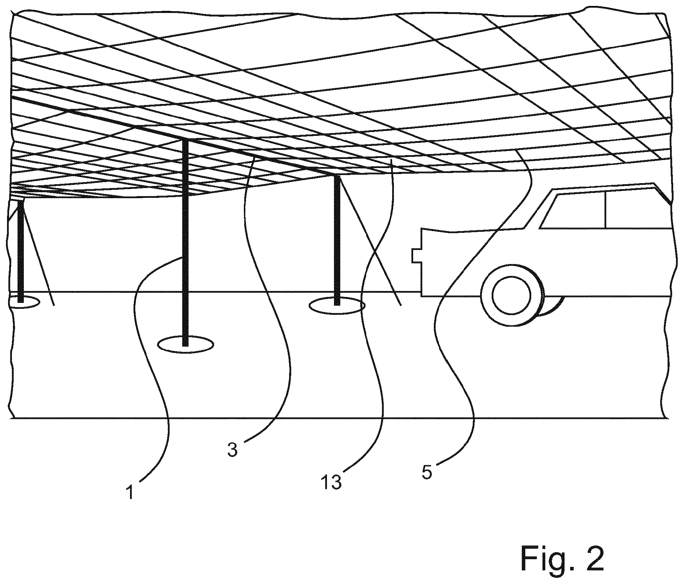

In der Figur 2 ist eine Isometrie eines Ausführungsbeispiels dargestellt. Aus dieser Isometrie ergibt sich, dass nicht die gesamte von der Tragstruktur überspannte Fläche mit PV-Modulen 13 bedeckt sein muss, sondern dass in den Gassen zwischen Parkplätzen ein Bereich frei bleiben kann. D. h. die PV-Module 13 sind nur dort angeordnet, wo die Fahrzeuge parken. Dort wo die Fahrzeuge fahren, d.h**.** in den Gassen zwischen den Reihen von Parkplätzen, sind keine PV-Module angebracht.

Dadurch, dass nicht die gesamte von den Traversen und den Spannbändern überspannte Fläche mit PV-Modulen belegt ist, sondern immer wieder unterbrochen ist, wird die Gefahr von windinduzierten Schwingungen mit großen Amplituden verringert. Auch das reduziert die Belastung der Spannbänder und führt gleichzeitig zu einer höheren Steifigkeit der erfindungsgemäßen Tragstruktur.

Außerdem fällt durch die nicht mit PV-Modulen bedeckten Bereiche Sonnenlicht auf die Fläche unterhalb der PV-Module. Dieses Sonnenlicht reicht in vielen Fällen aus, um eine landwirtschaftliche Fläche bzw. die dort befindlichen Pflanzen wachsen und gedeihen zu lassen. Weil die Pflanzen nur eine relativ kurze Zeit des Tages dem direkten Sonnenlicht ausgesetzt sind, ist die Gefahr, dass sie vertrocknen oder "verbrennen" geringer. Dies bedeutet, dass auch in heißen und trockenen Sommern Gemüse oder andere Nutzpflanzen angebaut werden können, die ohne Beschattung der Hitze nicht standhalten können. Die Belegung der Tragstruktur bzw. das Verhältnis von Modulfläche zur Grundfläche der Tragstruktur kann an das lokale Klima und die Nutzpflanzen angepasst werden. So würde man beispielsweise die Tragstruktur dichter mit PV-Modulen belegen, wenn sie in Saudi-Arabien aufgestellt wird, als wenn sie in Norddeutschland aufgestellt wird.

Durch den Einsatz bi-fazialer PV-Module kann der Stromertrag der PV-Module erhöht werden, weil dann ein Teil des vom Boden reflektierten Sonnenlichts die Unterseite der PV-Module erreicht und dort in elektrische Energie umgewandelt wird.

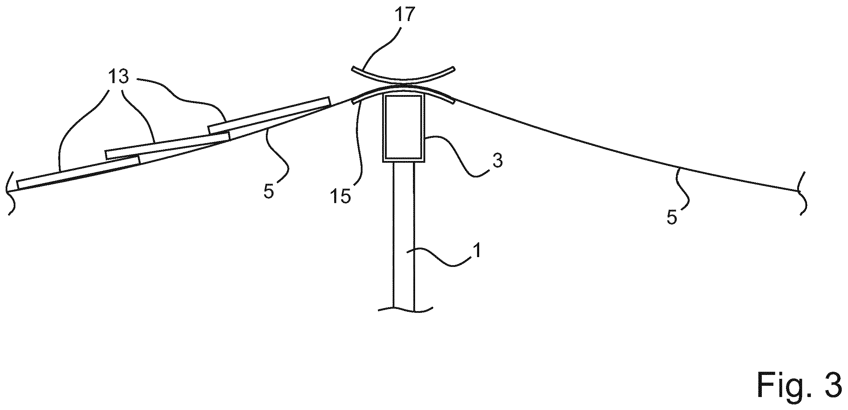

In der Figur 3 ist stark vereinfacht, ein Detail eines Ausführungsbeispiels einer erfindungsgemäßen Tragstruktur dargestellt. Dabei handelt es sich um einen Kreuzungspunkt 7 zwischen einer Traverse 3 und einem Spannband 5**.**

In der Figur 3 sind die Stütze 1, eine Traverse 3 (geschnitten) und ein Spannband 5 dargestellt. Links von der Traverse 3 sind mehrere PV-Module 13 auf dem Spannband 5 dargestellt. Diese PV-Module 13 sind wie Schindeln oder Dachziegel auf dem Spannband 5 aufgelegt bzw. befestigt. In der Figur 3 bedeutet dies, dass das linke Ende eines PV-Moduls 13 auf dem rechten Ende des daran anschließenden PV-Moduls 13 aufliegt, so dass sich die PV-Module 13 in einem schmalen Bereich überdecken. Dadurch wird die Entstehung eines Spalts zwischen den PV-Modulen 13 wird vermieden; die von den PV-Modulen 13 gebildete Fläche ist daher "wasserdicht". Ein weiterer Vorteil dieser geschindelten Anordnung ist, dass mit nur einem (in Figur 3 nicht dargestellten) Klemm- oder Befestigungselement zwei PV-Module 13 an dem Spannband 5 befestigt werden können.

In der Figur 3 sind die PV-Module 13 als rahmenlose Module ausgebildet. Das bedeutet, sie sind nicht von einem Aluminium-Rahmen oder einem anderen Rahmen umgeben. Das verringert das Eigengewicht, die Bauhöhe und die Kosten. Es ist aber selbstverständlich auch möglich, PV-Module 13 mit Rahmen auf der erfindungsgemäßen Tragstruktur anzubringen.

Auf dem Spannband 5, welches sich rechts der Traverse 3 befindet, sind keine PV-Module eingezeichnet. Es versteht sich von selbst, dass bei einer fertig ausgeführten Anlage auch dort PV-Module angebracht sein können.

Auf der Traverse 3 ist ein Sattelstück 15 sichtbar. Das Sattelstück 15 ist gekrümmt. Das Sattelstück 15 trägt das Spannband 5 und damit auch die Gewichtskräfte der PV-Module 13, die über die Spannbänder 5 in die Traverse 3 und die Stützen 1 eingeleitet werden müssen.

Das Sattelstück 15 ist an seiner Oberseite gekrümmt, damit das Spannband 5 ohne Knick und ohne bleibende Verformungen über die Traverse 3 geführt wird. Das Spannband 5 kann aus einem Blechstreifen aus hochfestem Stahl bestehen und beispielsweise 3 mm dick und 100 mm breit sein.

Oberhalb des Sattelstücks 15 ist ein Gegenstück 17 angeordnet. Zwischen dem Sattelstück 15 und dem Gegenstück 17 wird das Spannband 5 geführt. Das Gegenstück 17 kann mit nicht dargestellten Schrauben mit dem Sattelstück 15 oder der Traverse 3 verschraubt werden. Dadurch entsteht eine Klemmverbindung zwischen Sattelstück 15 und Gegenstück 17, welche das Spannband 5 reibschlüssig mit dem Sattelstück 15 bzw. der Traverse 3 verbindet. Diese Klemmverbindung sorgt dafür, dass das Spannband 5 sich nicht relativ zu der Traverse 3 verschieben kann. Dadurch werden die Stützen 1 in ihrer vertikalen Ausrichtung fixiert und stabilisiert. Außerdem sichert die Klemmverbindung das Spannband 5 gegen Abheben von dem Sattelstück 15, falls eine Windböe von unten gegen die PV-Module 13 bläst.

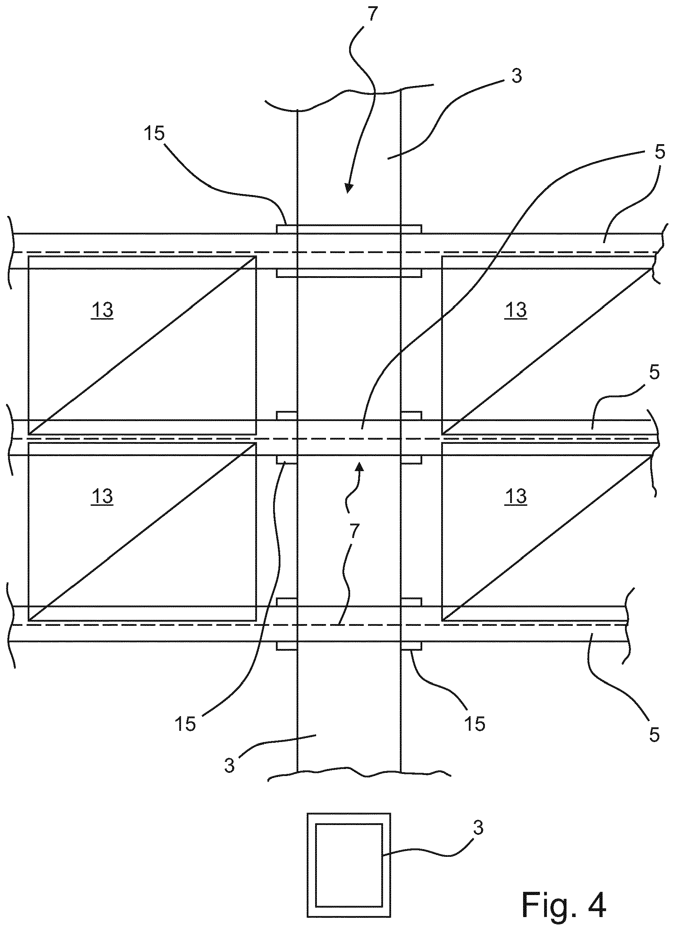

In der Figur 4 ist Anordnung gemäß Figur 3 von oben dargestellt. Dadurch wird die konstruktive Ausgestaltung der Kreuzungspunkte 7 noch etwas deutlicher. In der Figur 4 sind exemplarisch rechts und links der Traverse 3 jeweils zwei PV-Module 13 angeordnet. In dieser Draufsicht ist gut zu erkennen, dass jeweils zwei PV-Module auf einem Spannband 5 aufliegen. Bei einer Breite des Spannbands 5 von beispielsweise 100 mm, ist die Auflagefläche jedes PV-Moduls 13 auf dem Spannband 5 etwa fünfzig Millimeter breit. Das reicht aus, um die PV-Module 13 sicher an dem Spannband 5 zu befestigen.

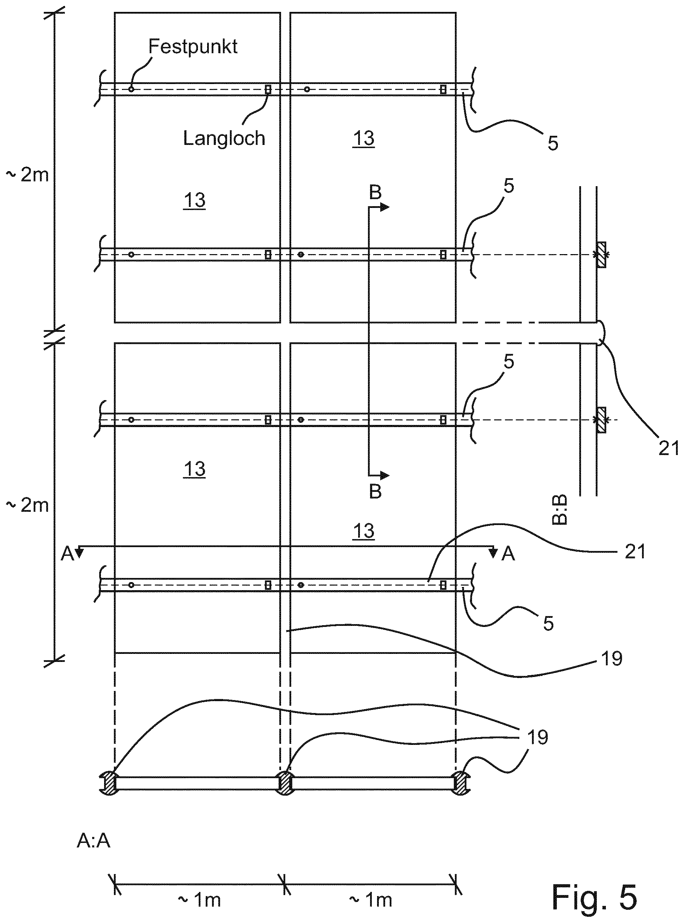

In der Figur 5 ist eine Draufsicht auf ein weiteres Ausführungsbeispiel einer erfindungsgemäßen PV-Anlage dargestellt. Es handelt sich dabei nur um einen Ausschnitt aus einer von PV-Modulen 13 überspannten Fläche. Traversen 3 oder Stützen 1 sind in diesem Ausschnitt nicht vorhanden. Der Ausschnitt zeigt vielmehr, dass zwischen benachbarten PV-Modulen 13 Dichtungen oder Dichtprofile 19 angeordnet sind. Dadurch wird ein direkter Kontakt zwischen den PV-Modulen 13, verhindert und diese vor gegenseitigen Beschädigungen geschützt. Außerdem wird die Fuge zwischen den PV-Modulen 13 abgedichtet.

Die Dichtleiste 19 bzw. das Dichtprofil 19 wird in den Fugen zwischen PV-Modulen 13, die parallel zur Traverse 3 verlaufen, angeordnet. In den Fugen, die parallel zu dem Spannband 5 verlaufen, ist ein (Dicht-)Profil angeordnet, welches die Funktion einer Regenrinne hat. Daher wird es auch als Regenrinne 21 bezeichnet. Das Dichtprofil 19 und die Regenrinne 21 können aus einem flexiblen und UVbeständigen Material, wie **z.B.** EPDM, gefertigt werden. Regenwasser, das auf den PV-Modulen auftrifft, sammelt sich in den Regenrinnen 21 und wird nach unten abgeleitet. An der unteren Kante einer von PV-Modulen 13 überdeckten Fläche kann das durch die Regenrinnen 21 abfließende Wasser gesammelt und z.B. einem Regenwasserspeicher oder direkt der landwirtschaftlich genutzten Fläche unterhalb der PV-Module 13 zugeführt werden.

Bei der in Figur 5 dargestellten Ausführungsform sind die PV-Module 13 nebeneinander angeordnet. Die Breite der Fugen in denen ein Dichtprofil 19 vorgesehen ist, kann beispielsweise 5 mm betragen. Dort wo eine flexible Regenrinne 21 angeordnet werden soll, kann die Breite der Fuge 30 mm oder 50 mm betragen.

Bei dem in Figur 5 dargestellten Ausführungsbeispiel liegen die PV-Module 13 nicht mit ihren Rändern auf den Spannbändern 5 auf. Es ist vielmehr so, dass die PV-Module auf zwei Spannbändern 5 aufliegen. Ein Spannband 5 verläuft etwa bei einem Viertel (1/4) der Länge des PV-Moduls 13, das andere Spannband 5 verläuft etwa bei drei Viertel (3/4) der Länge des PV-Moduls 13; das ist die sogenannte Lagerung in den Viertelspunkten. Dadurch wird die Biegebeanspruchung der PV-Module 13 reduziert und die (Aluminium-)Rahmen der PV-Module 13 können kleiner und leichter ausfallen. Die Befestigung der PV-Module 13 an den Spannbändern 5 erfolgt über eine Verschraubung der (Aluminium-)Rahmen mit den Spannbändern 5 in den von dem Hersteller des PV-Moduls empfohlenen Positionen.

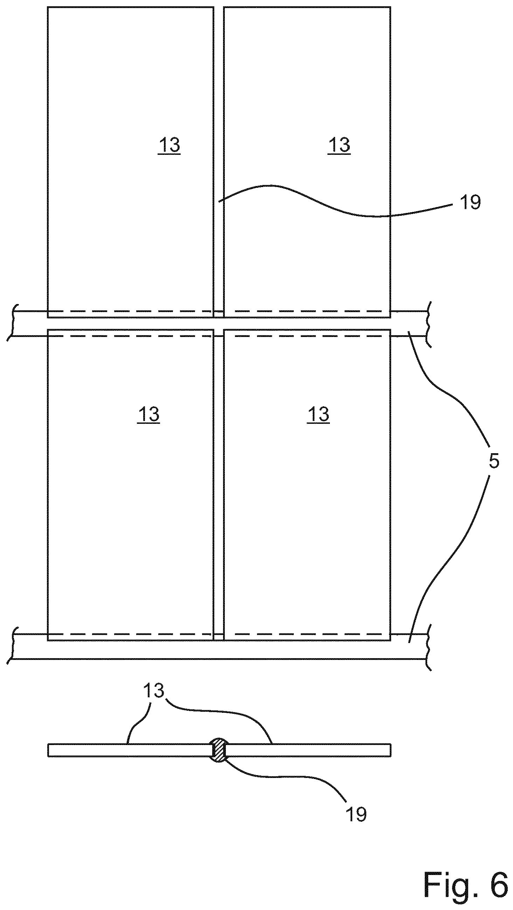

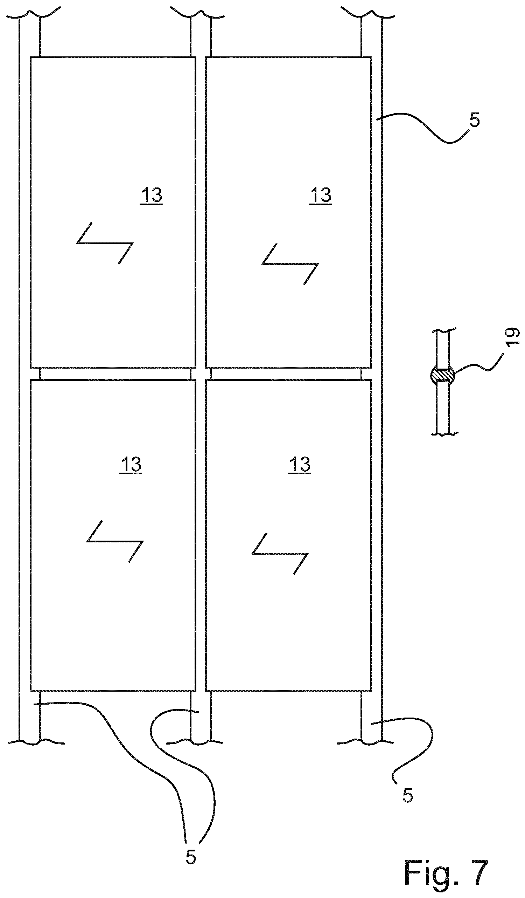

In den Figuren 6 und 7 sind zwei weitere Varianten der Anordnung von PV-Modulen 13 auf den Spannbändern 5 dargestellt. In der Figur 6 liegen die kurzen Seiten der rechteckigen PV-Module 13 auf einem Spannband 5 auf. Zwei benachbarte PV-Module "teilen" sich die Breite eines Spannbands. Zwischen den PV-Modulen 13 ist in den Fugen, die senkrecht zu den Spannbändern 5 verlaufen, eine Dichtleiste 19 angeordnet. Bei dem Ausführungsbeispiel gemäß Figur 7 ist der Abstand der Spannbänder 5 so gewählt, dass die PV-Module 13 mit ihren langen Seiten auf zwei benachbarten Spannbändern aufliegen. Auch hier ist die Dichtung 19 in den Fugen vorgesehen, die senkrecht zur Längsachse der Spannbänder 5 verlaufen. Die (nicht dargestellte) Regenrinne 21 verläuft parallel zu den Spannbändern.

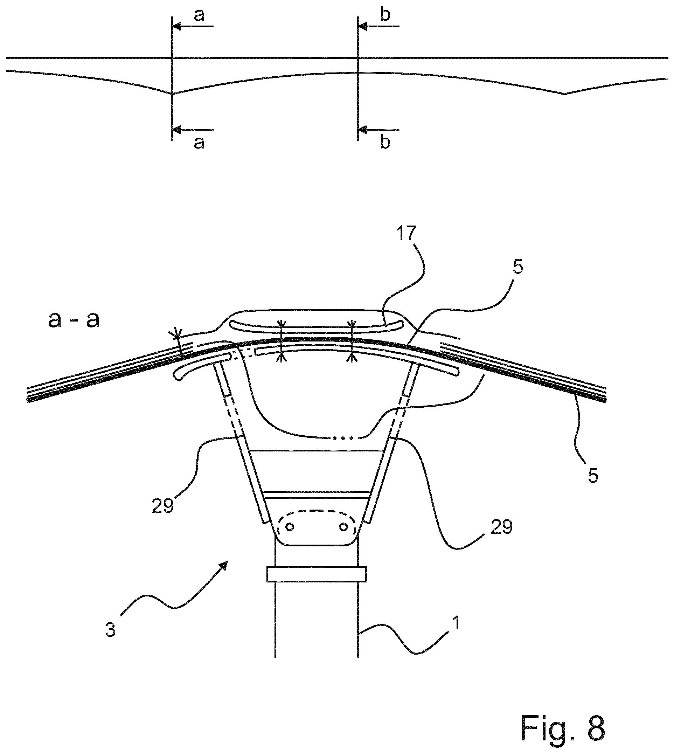

In der Figur 8 sind Details einer weiteren Ausführungsform dargestellt, bei der die Oberseite der Traversen 3 gekrümmt sind. Die Oberseite der Traverse 3 übernimmt bei diesem Ausführungsbeispiel die Funktion eines Sattelstücks. Die Traversen 3 sind aus Stahl und als Schweißkonstruktion ausgeführt. Das hat den Vorteil, dass die Hauptabmessungen und der Querschnitt der Traverse 3 sowie deren Material in weiten Grenzen frei wählbar sind.

In der in Figur 8 im Schnitt dargestellten Traverse 3 ist auf beiden Seiten ein optionales Handloch 29 ausgebildet. Die Handlöcher 29 sind so groß, dass die Hand eines Monteurs hindurchgreifen kann. Durch die Handlöcher 29 können Schrauben oder Muttern in die Traverse 3 eingeführt werden. Die Schrauben oder Muttern werden benötigt, um das Gegenstück 17 an der Oberseite des Traverse 3 zu befestigen.

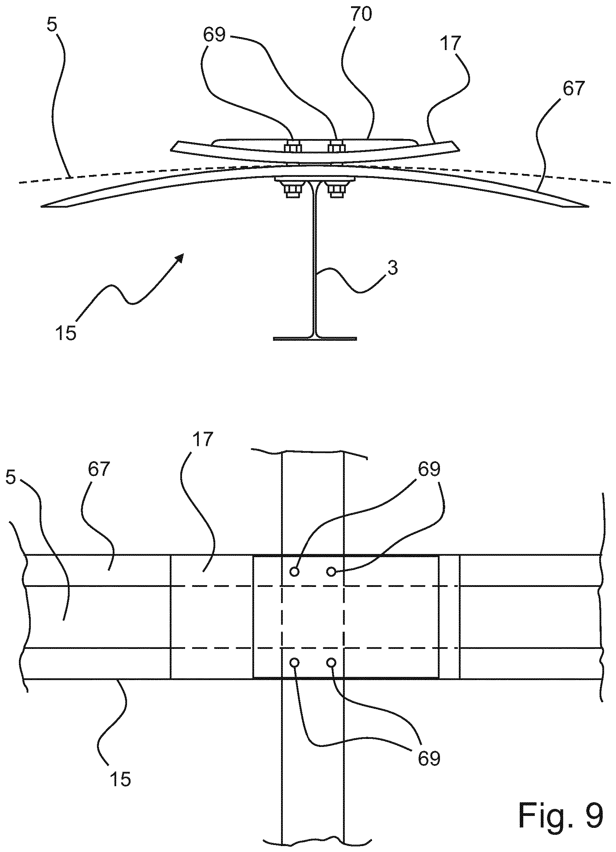

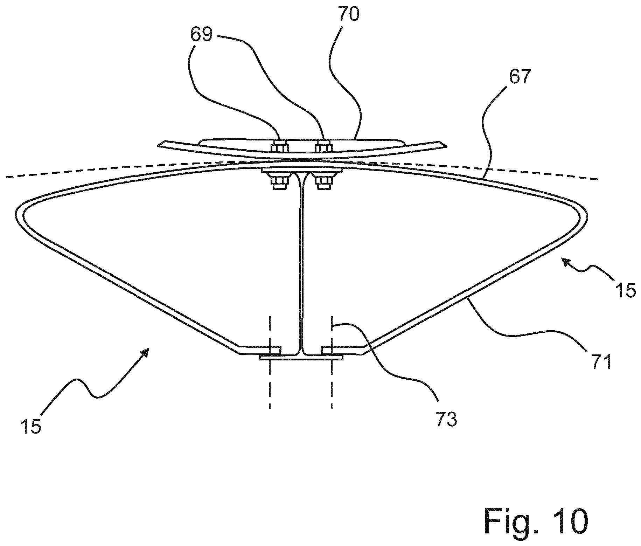

In den Figuren 9 und 10 sind verschiedene Ausführungsformen von erfindungsgemäßen Sattelstücken 15 dargestellt. Bei dem in der Figur 9 dargestellten Ausführungsbeispiel ist die Traverse 3 als Breitflanschprofil ausgebildet. Diese Profile wurden früher auch als "Doppel_-T-Träger" bezeichnet. Die Stützen, welche die Traverse 3 tragen, sind nicht dargestellt.

Das Sattelstück 15 umfasst eine gebogene Auflage 67. Diese gebogene Auflage kann aus einem Blechzuschnitt, beispielsweise durch Rollbiegen, hergestellt werden. Der Krümmungsradius der gebogenen Auflage ist deutlich kleiner als die Krümmung des Spannbands 5. Der Krümmungsradius kann zum Beispiel 1,5 m betragen.
in Folge dessen entsteht nur dort, wo das Spannband 5 zwischen der Auflage 67 und dem Klemmstück 17 hindurchgeführt wird, ein direkter Kontakt zwischen dem Spannband 5 und der Auflage 67. Wenn nun, beispielsweise aufgrund von Windlasten, das Spannband 5 in Schwingungen versetzt wird, dann ist wegen der Krümmung der Auflage 67 sichergestellt, dass das Spannband 5 nicht geknickt wird. Vielmehr liegt das Spannband immer tangential an der Auflage 67 auf.

Bei diesem Ausführungsbeispiel ragen die Klemmschrauben 69 durch das Klemmstück 17 und die Auflage 67 sowie den oberen Träger der als Breitflanschprofils ausgeführten Traverse 3. Durch Anziehen der Klemmschrauben 69 wird das Spannband 5 zwischen der Auflage 67 und dem Gegenstück 17 geklemmt und dadurch reibschlüssig fixiert.

Es ist nicht erforderlich, Durchbrüche oder Bohrungen in dem Spannband 5 anzubringen, weil das Sattelstück 15 und das Gegenstück 17 breiter als das Spannband 5 sind. Das wird deutlich anhand der Draufsicht im unteren Teil der Figur 9.

Auf der Baustelle wird das Spannband 5 auf die Auflage 67 gelegt. Sobald sich das Spannband 5 an der richtigen Position befindet und eine ausreichende Vorspannung aufgebracht wurde, werden die Klemmschrauben 69 angezogen. Dadurch wird das Gegenstück 17 gegen die Auflage 67 gezogen. Auf diese Weise wird das Spannband 5 mit der Auflage 67 und damit auch mit der Traverse 5 reibschlüssig verbunden.

Die Figur 10 zeigt eine Variation dieses Sattelstücks 15. Bei diesem Sattelstück 15 ist die Auflage 67 als gebogener Blechstreifen ausgebildet, dessen Enden sich an dem unteren Flansch der Traverse 3 abstützen. Diese Verbindung zwischen den Enden des Biegeteils 71 und dem unteren Flansch der Traverse 3 ist durch strichpunktierte Linien 73 angedeutet. An dieser Stelle können beispielsweise Befestigungsschrauben durch das Biegeteil 71 und den unteren Flansch der Traverse 3 gesteckt werden.

Es ist aber auch möglich, dass die Enden des Biegeteils über Klemmstücke (nicht dargestellt) mit dem unteren Flansch der Traverse 3 reibschlüssig verbunden sind. Das hat den Vorteil, dass der untere Steg der Traverse 3 nicht mit Löchern oder Durchbrüchen versehen werden muss. Diese würden die Biegesteifigkeit der Traverse 3 verringern und verursachen einen zusätzlichen Herstellungsaufwand. Es kann in vielen Fällen wirtschaftlicher sein, anstelle der Bohrungen/Durchbrüche in dem unteren Flansch der Traverse mit Klemmstücken zu arbeiten, die in industrieller Großserienfertigung sehr kostengünstig herstellbar sind.

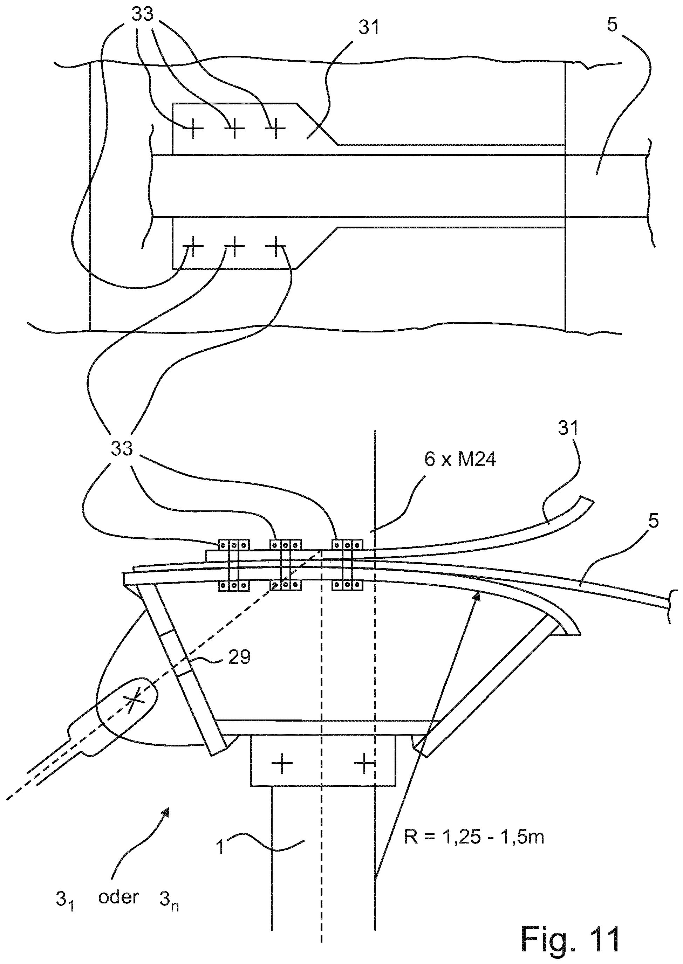

In der Figur 11 sind Details einer weiteren Ausführungsform dargestellt. In dieser Figur ist eine erste Traverse 3₁ bzw. eine letzte Traverse 3ₙ dargestellt. Diese Traversen unterscheiden sich insofern von den anderen Traversen 3, als dort die Spannbänder 5 enden. Außerdem werden dort die Zugmittel 11 eingehängt. Die Zugmittel 11 leiten die Vorspannkraft der Spannbänder 5 in die Fundamente 9 ein (siehe Figur 1).

Das Gegenstück 31 ist ähnlich geformt wie eines der Gegenstücke 17. Zwischen der gekrümmten Oberseite der Traverse 3₁ und dem Gegenstück 31 wird das Ende des Spannbands 5 eingelegt. Das Gegenstück 31 wird mit Hilfe mehrerer Schrauben 33 gegen die Traverse 3₁ bzw. 3ₙ gezogen und auf diese Weise eine kraftschlüssige Verbindung zwischen dem Ende des Spannbands 5 und der Traverse 3.1 bzw. 3ₙ hergestellt. Über diese kraftschlüssige Verbindung werden die Vorspannkräfte von der Traverse 3₁ bzw. 3ₙ in das Spannband 5 eingeleitet bzw. von diesem aufgenommen.

Links in der Figur 11 ist eine Lasche an der Traverse 3₁ bzw. 3ₙ angeordnet. Dort wird das Zugmittel 11 (zum Beispiel ein Stahlseil) eingehängt. Das Fundament 9 am anderen Ende des Zugmittels 11 ist in der Figur 11 nicht dargestellt.

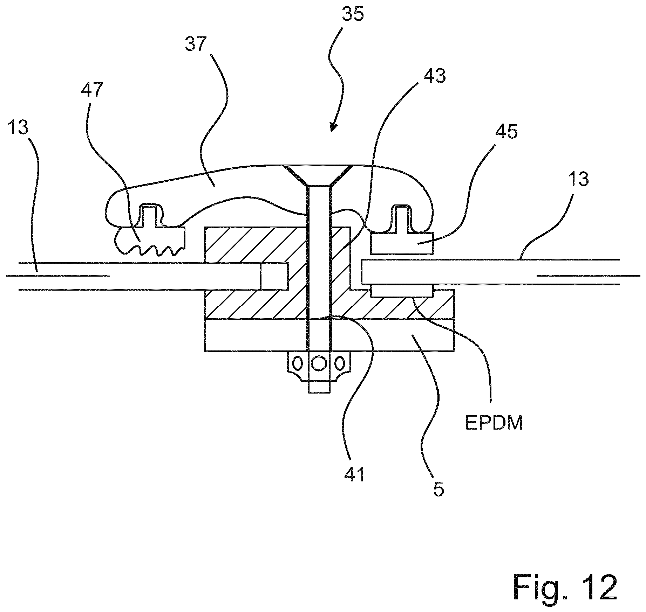

In der Figur 12 ist ein erstes Ausführungsbeispiel eines Klemmelements 35 dargestellt. Es umfasst ein Klemmstück 37, eine Spannschraube 41, eine Dichtleiste 43, einem Fuß 45 sowie einem Druckstück 47. Die Dichtleiste 43 kann einen konstanten Querschnitt haben oder in ihrer Länge einen in der Höhe veränderlichen Querschnitt aufweisen, welcher eine geneigte, geschindelte Lagerung ermöglicht. Das Klemmstück 37 ist oberhalb der PV-Module 13 angeordnet. Die Spannschraube 41 ragt durch das Klemmstück 37 und das Spannband 5 hindurch. Wenn die Spannschraube 41 angezogen wird, dann wird das Klemmstück 37 mit dem Fuß 45 und dem Druckstück 47 von oben gegen die PV-Module 13 gedrückt. Der Fuß 45 ist aus einem vergleichsweise harten Kunststoff. Er drückt auf das PV-Modul rechts der Spannschraube 41. Dieses PV-Modul ist nur einseitig auf der Dichtleiste 43 gelagert. Daher drückt der Fuß 45 direkt auf das PV-Modul 13.

Das links der Spannschraube 41 befindliche PV-Modul 13 ist in einer Nut der Dichtleiste 43 aufgenommen. Das Druckstück 47 klemmt das PV-Modul 13 in der Nut der Dichtleiste 43 ein. Das Druckstück 47 kann an seiner Unterseite Rippen oder Borsten aufweisen und/oder aus einem vergleichsweise weichen Material hergestellt werden.

Wie sich aus der Figur 12 ergibt, ist das Klemmstück 37 nicht symmetrisch bezüglich der Spannschraube 41. Vielmehr ist der Hebelarm zwischen Spannschraube 41 und dem Fuß 45 kürzer als der Hebelarm zwischen Spannschraube 41 und dem Druckstück 47. Das bedeutet, dass der Fuß 45 eine höhere Anpresskraft auf das PV-Modul 13 ausübt als das Druckstück 47. Daher bildet der Fuß 45 gewissermaßen ein Festlager. Dort wo das Druckstück 47 das PV-Modul 13 mit geringerer Kraft klemmt, ist ein "Loslager". Thermische Verspannungen oder andere Verspannungen werden abgebaut, indem das PV-Modul 13 (in Figur 11 links der Spannschraube 41) sich relativ zu dem Klemmelement 35 etwas verschieben kann.

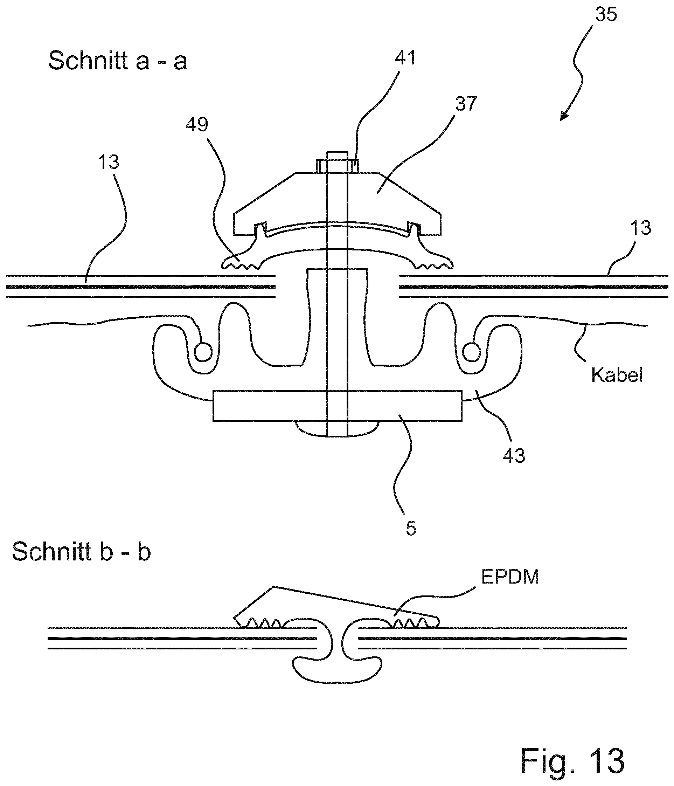

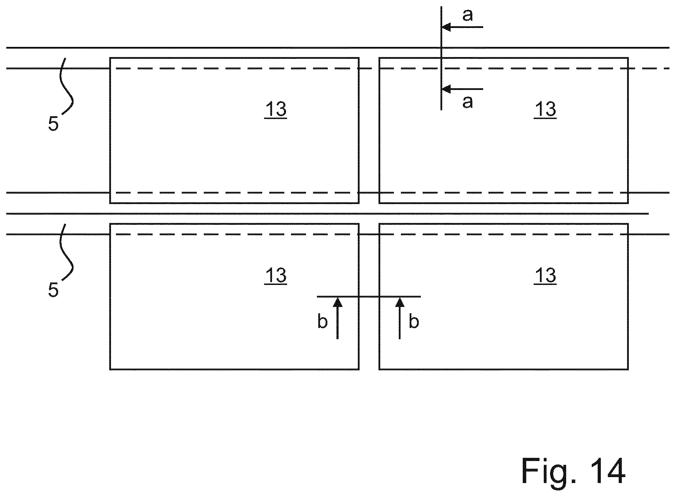

In der Figur 13 ist ein Schnitt entlang der der Linie a-a in Figur 14 dargestellt. Sie zeigt ein weiteres Ausführungsbeispiel eines Klemmelements 35 mit einer symmetrischen Anordnung. Die Dichtleiste 43 ist anders geformt. Sie weist zwei unterschiedlich hohe Lippen auf.

Unterhalb des Klemmstücks 37 ist ein Gummielement 49 angeordnet, welches die von dem Klemmstück 37 und der Spannschraube 41 auf die PV-Module 13 ausgeübten Spannkräfte verteilt und das PV-Modul 13 vor Beschädigungen schützt.

In der Figur 14 ist die Anordnung mehrerer PV-Module ohne Rahmen und ohne Schindelung angedeutet.

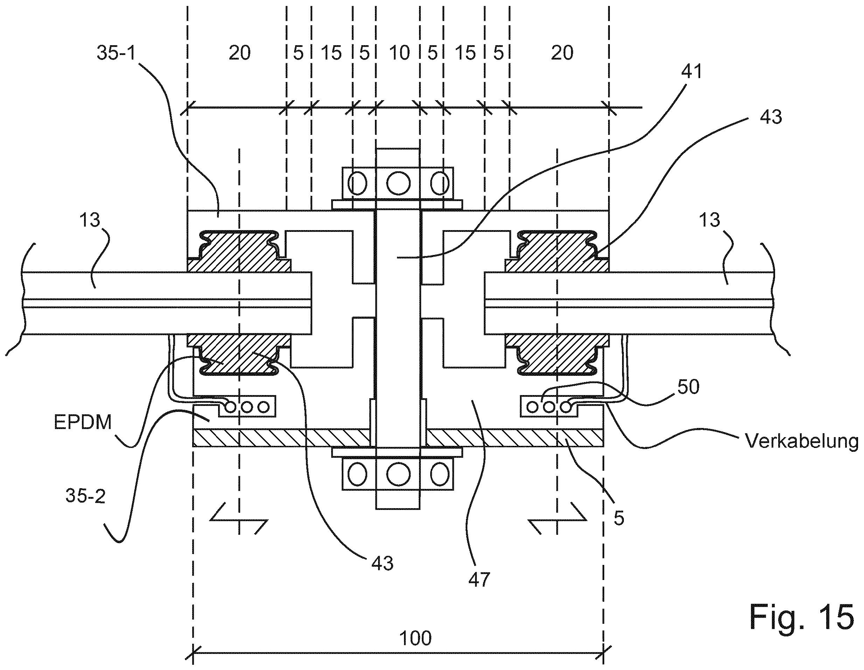

Die Figur 15 zeigt ein weiteres Ausführungsbeispiel eines Klemmelements 35. Auch hier ist, wie bei der Figur 13, eine symmetrische Anordnung bezogen auf die Spannschraube 41 vorgesehen. In unteren Teil 35-2 des Klemmelements 35 ist ein Kanal 50 für die elektrischen Leitungen der PV-Module 13 ausgebildet.

Sowohl das obere als auch das untere Teil des Klemmelements 35 sind bei diesem Ausführungsbeispiel ein Strangpressprofil aus Aluminium, das parallel zu dem Spannband 5 verläuft.

Zwischen den beiden Teilen 35-1 und 35-2 des Klemmelements 35 und den PV-Modulen 13 sind Dichtleisten 43 vorgesehen.

Durch Anziehen der Spannschaube 41 wird das PV-Modul 13 zwischen den Dichtleisten 43 geklemmt.

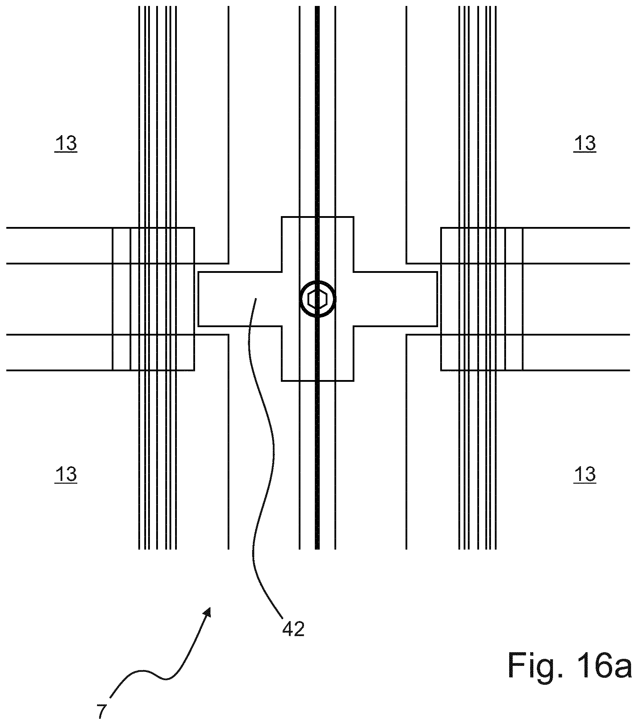

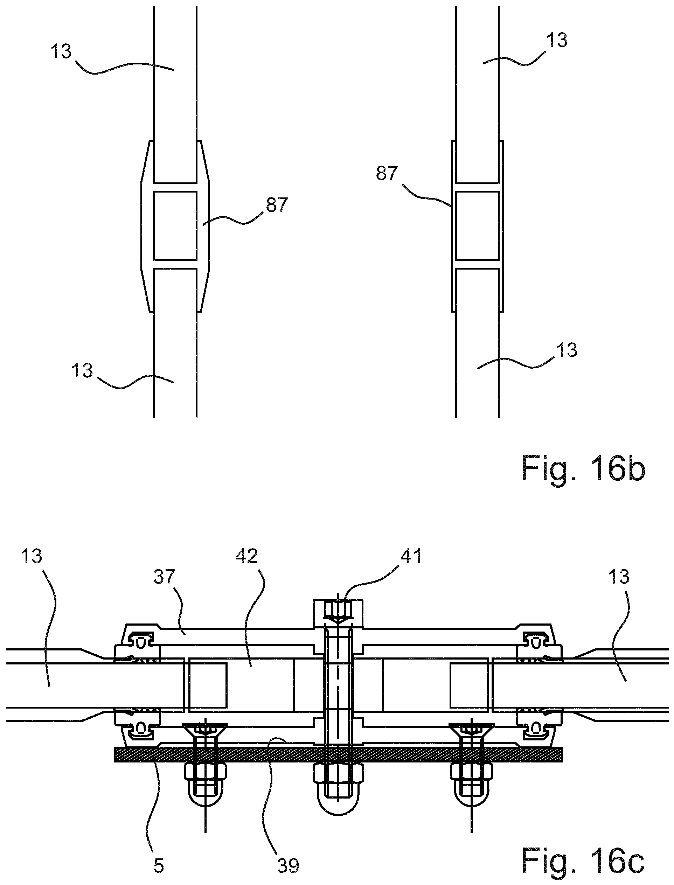

In der Figur 16 werden Details der Abdichtung im Bereich eines Kreuzungspunkts 7 gezeigt. Dort "stoßen" vier PV-Module 13 aneinander, jedoch ohne sich zu berühren. Um eine direkte Berührung der zerbrechlichen PV-Module 13 zu verhindern, ist ein Abstandshalter 42 mit Spiel zwischen den Ecken der PV-Module 13 angeordnet. Der Abstandshalter 42 kann zum Beispiel aus einem nachgiebigen Kunststoff, wie EPDM, hergestellt werden.

Die PV-Module 13 und der Abstandshalter 42 sind auf einer Ebene angeordnet, wie sich zum Beispiel aus der Figur 16c ergibt.

Aus der Figur 16c ergibt sich weiter, dass die PV-Module 13 und der Abstandshalter 42 zumindest im Bereich des Kreuzungspunkts 7 auf einem unteren Klemmstück 37 aufliegen. Das untere Klemmstück 37 ist mit einer oder mehreren (Senkkopf-)Schrauben (ohne Bezugszeichen) mit dem Spannband 5 verbunden.

Die PV-Module 13 liegen nicht direkt auf dem unteren Klemmstück 39 auf, Vielmehr liegen sie auf Dichtleisten 43 auf, die wiederum in entsprechenden Nuten des Klemmstücks 39 aufgenommen sind.

Oberhalb der PV-Module 13 und des Abstandshalters 42 ist zumindest im Bereich des Kreuzungspunkts 7 ein oberes Klemmstück 39 mit Dichtleisten 43 angeordnet, das baugleich wie das untere Klemmstück 37 ausgeführt sein kann.

Über eine Spannschraube 41, welche die Klemmstücke 37, 39 und den Abstandshalter 42 durchdringt, werden die PV-Module 13 indirekt an dem Spannband 5 befestigt.

Außerhalb des Kreuzungspunkts 7 ist eine als Hohl- oder Kastenprofil ausgestaltete weitere Dichtleiste 87 vorgesehen, die in der Figur 16b dargestellt ist.

Im Bereich des Kreuzungspunkts 7 ist die Dichtleiste 87 abgeflacht, um zu verhindern, dass es dort wo sich die Dichtleisten 43 und die Dichtleisten 87 kreuzen zu einer Materialanhäufung kommt

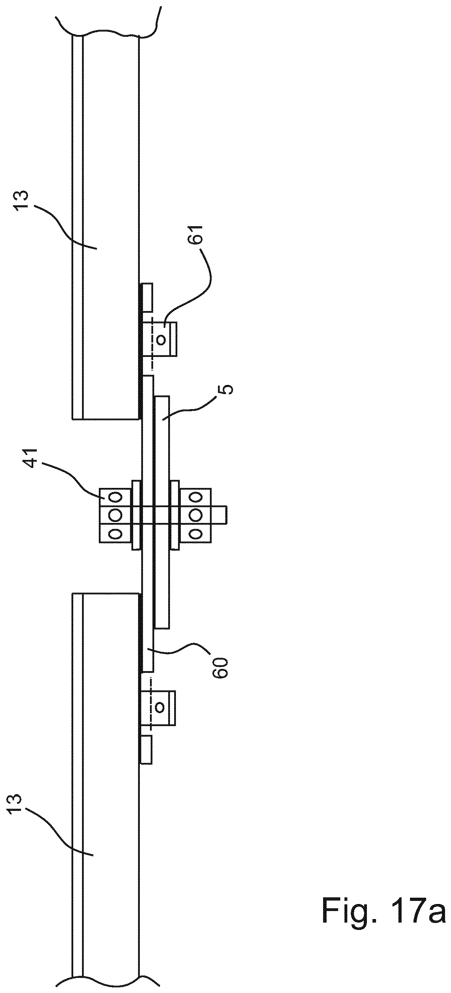

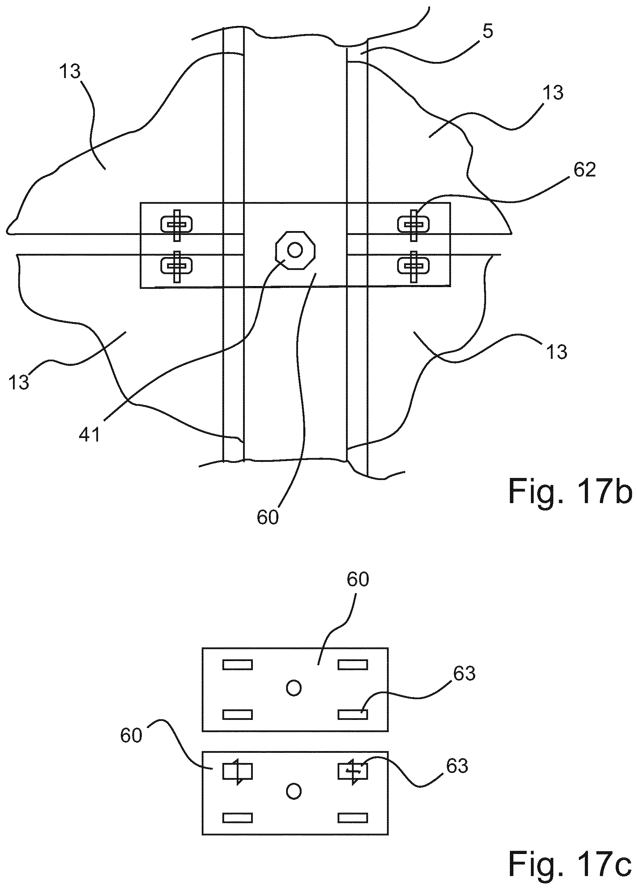

Die Figuren 17a, 17b und 17c zeigen eine Verbindung von vier PV-Modulen 13 und einem Spannband 5. Auf dem Spannband 5 liegt ein Verbindungsstück 60. Es besteht bevorzugt aus einem Blech mit vier Langlöchern 63 und einer (zentralen) Befestigungsbohrung 64 bzw. einem Durchbruch.

An den Unterseiten der PV-Module 13 ragen Blechlaschen 61 mit einem Loch (ohne Bezugszeichen) hervor. Jeweils eine Blechlasche 61 wird durch ein Langloch 63 gesteckt. Um zu verhindern, dass das PV-Modul 13 vom Spannband 5 abhebt, wenn es von einer Böe erfasst wird, wird ein Splint, ein Stift oder eine Schraube durch das Loch in der Lasche 61 gesteckt.

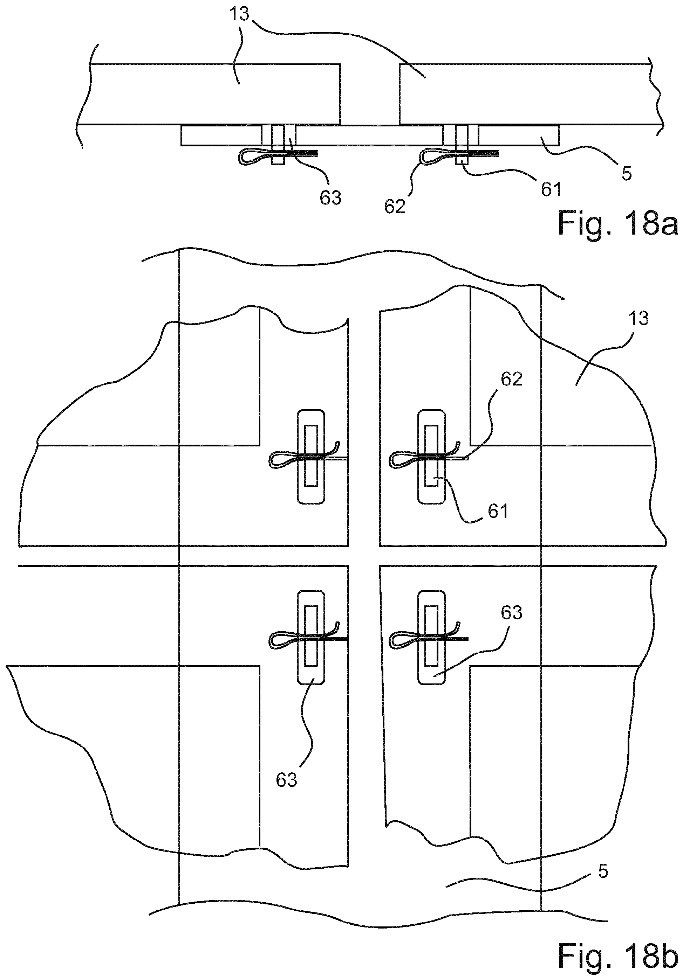

Die Figur 18 zeigt eine Alternative zu der in Fig. 17 dargestellten Ausführungsform. Dabei sind die Langlöcher 63 im Spannband 5 ausgebildet, so dass kein Verbindungsstück 60 benötigt wird.

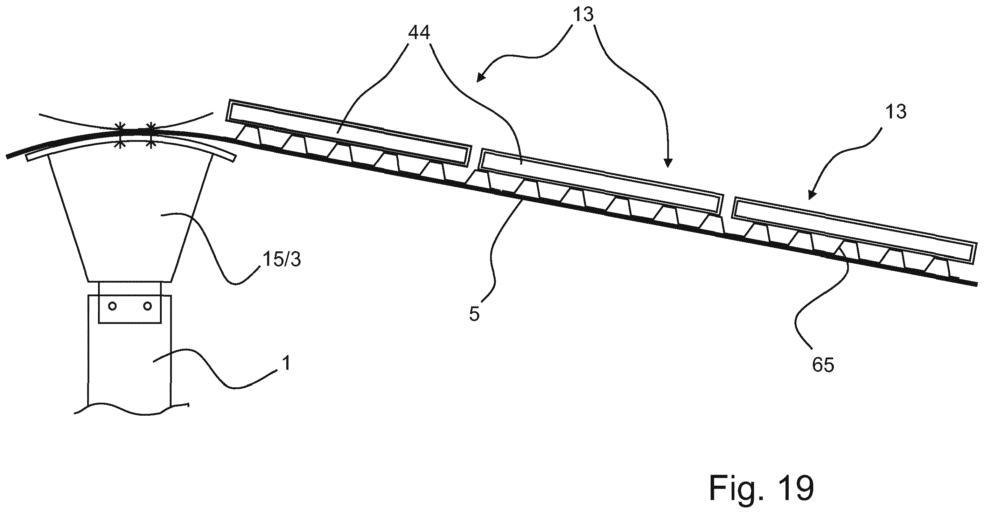

In der Figur 19 ist ein weiteres Ausführungsbeispiel einer erfindungsgemäßen Tragstruktur dargestellt. Bei diesem Ausführungsbeispiel ist zwischen den Spannbändern 5 und den PV-Modulen 13 ein Trapezblech 65 angeordnet. Diese Variante ist sehr kostengünstig und "wasserdicht", weil das Trapezblech 65 zuverlässig verhindert, dass Regenwasser auf die Fläche unterhalb der Tragstruktur gelangt. Das Wasser wird über das Trapezblech, welches leicht geneigt ist abgeführt und ggf. gesammelt. Dichtleisten (siehe die Bezugszeichen 19 und 43 in den anderen Figuren) werden dazu nicht benötigt.

Trapezbleche haben bei geringem Eigengewicht und geringen Kosten, eine beachtliche Tragfähigkeit, so dass kostengünstige "Standard" PV-Module 13 mit Rahmen 44 auf dem Trapezblech montiert werden können. Der Rahmen 44 dieser PV Module 13 kann durch die geringen Spannweiten sehr leicht ausfallen. Das Trapezblech wird an die (trotz der Vorspannung leicht "durchhängenden") Spannbänder 5 genietet oder geschraubt.

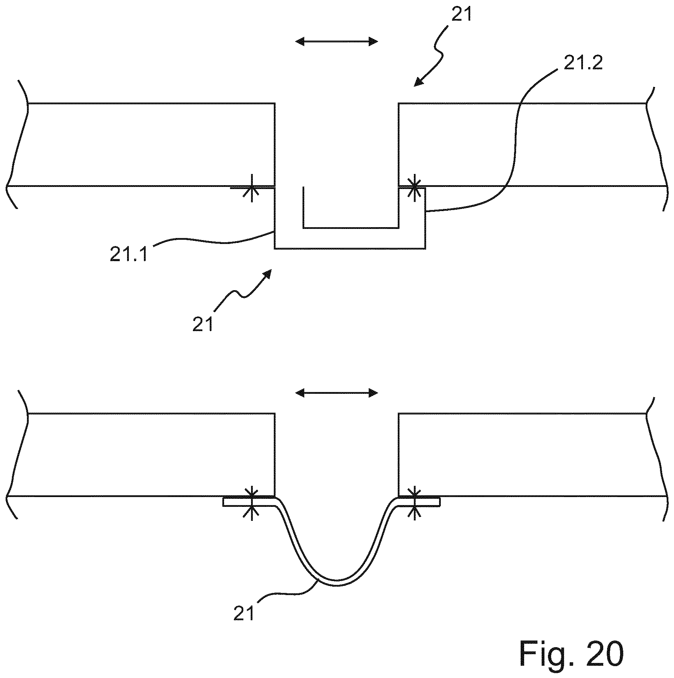

Die Figur 20 zeigt zwei Ausführungsformen von Regenrinnen 21. Im oberen Teil der Figur 20 ist eine zweiteilige Regenrinne 21 dargestellt, die aus zwei Kunststoffprofilen oder abgekanteten Blechen bestehen kann. Die beiden Teile 21.2 und 21.2 sind so angeordnet, dass Regenwasser abgeleitet wird. Die beiden Teile der Regenrinne 21.1 und 21.2 sind nicht fest miteinander verbunden, sodass sie die windinduzierten Verformungen und/oder Wärmedehnungen ausgleichen können. In dem unteren Teil der Figur 20 ist eine Regenrinne 21 angedeutet, die aus einem Streifen eines elastischen Kunststoffmaterials, wie **z.B.** EPDM, besteht.

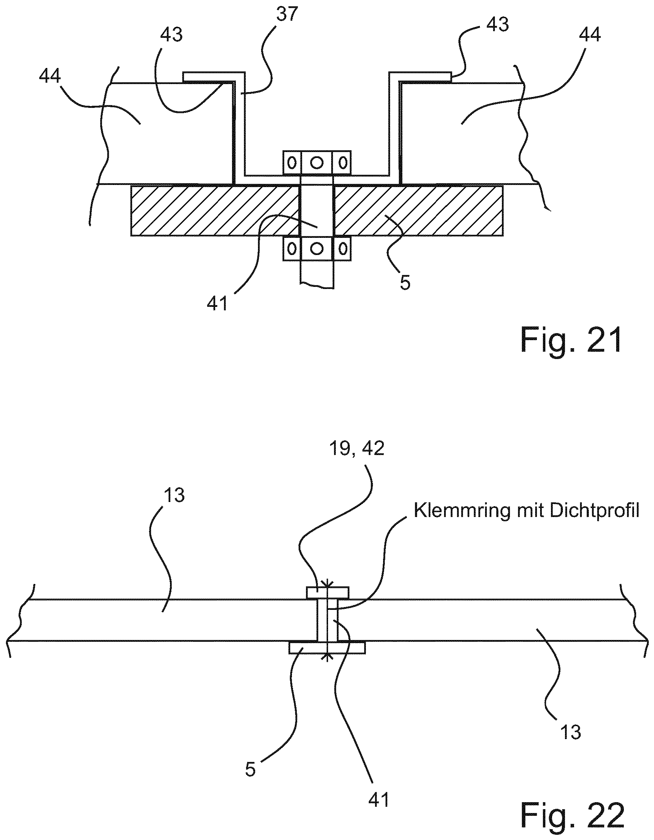

In den Figuren 21 bis 32 sind weitere Ausführungsformen der Verbindung zwischen PV-Modulen 13 und Spannbändern 5 mit den zugehörigen Bauelementen dargestellt.

Bei dem in Figur 21 dargestellten Ausführungsbeispiel 1 ist das obere Klemmelement 37 als auf den Kopf gestellte "Hut"-Schiene mit einem Mittelteil und zwei seitlichen Leisten ausgebildet. ein PV-Modul mit Rahmen 44 wird zwischen einer seitlichen Leiste und dem Spannband 5 geklemmt, wenn die Spannschaube 41, welche den Mittelteil und das Spannband 5 durchdringt, angezogen wird.

Bei dem in Figur 22 dargestellten Ausführungsbeispiel 1 erfolgt die Klemmung der PV-Modul 13 (mit oder ohne Rahmen) mit Hilfe einer Dichtleiste 19, wenn die Spannschaube 41 angezogen wird, welche die Dichtleiste 19 und das Spannband 5 durchdringt.

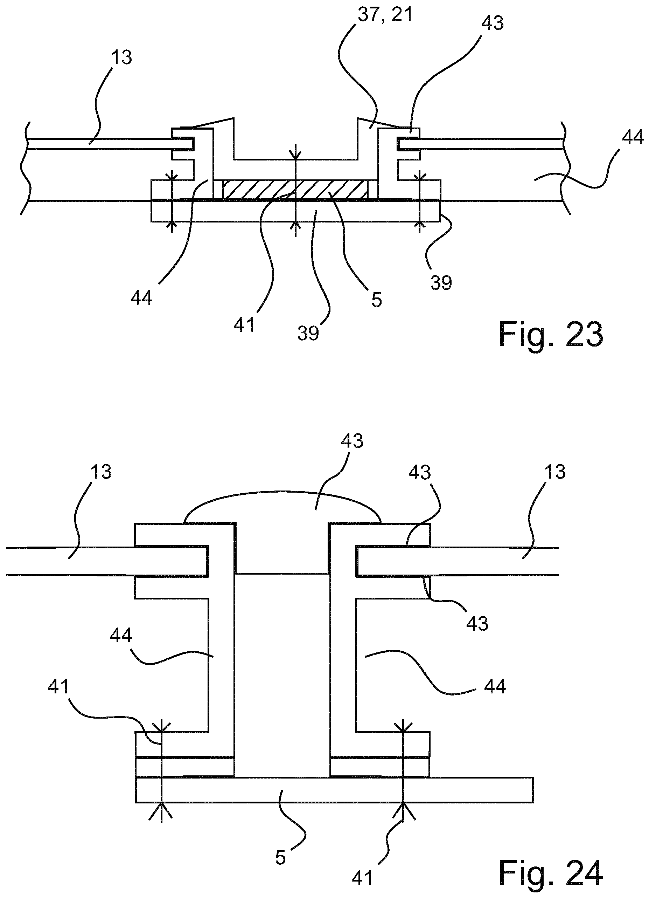

Bei dem in Figur 23 dargestellten Ausführungsbeispiel 1 erfolgt die Klemmung der PV-Modul 13 über deren Rahmen 44**.** Das obere Klemmstück 37 ist als Regenrinne ausgebildet. Zwischen dem obere Klemmstück 37 und dem Rahmen 44 ist eine Dichtleiste 43 vorgesehen. Die Spannschaube 41 durchdringt die Regenrinne 21, das Spannband 5 und das untere Klemmstück 39**.**

Bei dem in Figur 24 dargestellten Ausführungsbeispiel 1 erfolgt die Verbindung zwischen einem PV-Modul 13 über den Rahmen 44**.** Im "unteren" Teil weist der Rahmen 44 einen Schenkel auf. Die Spannschaube 41 durchdringt diesen Schenkel, ein optionale Dichtleiste und das Spannband 5.

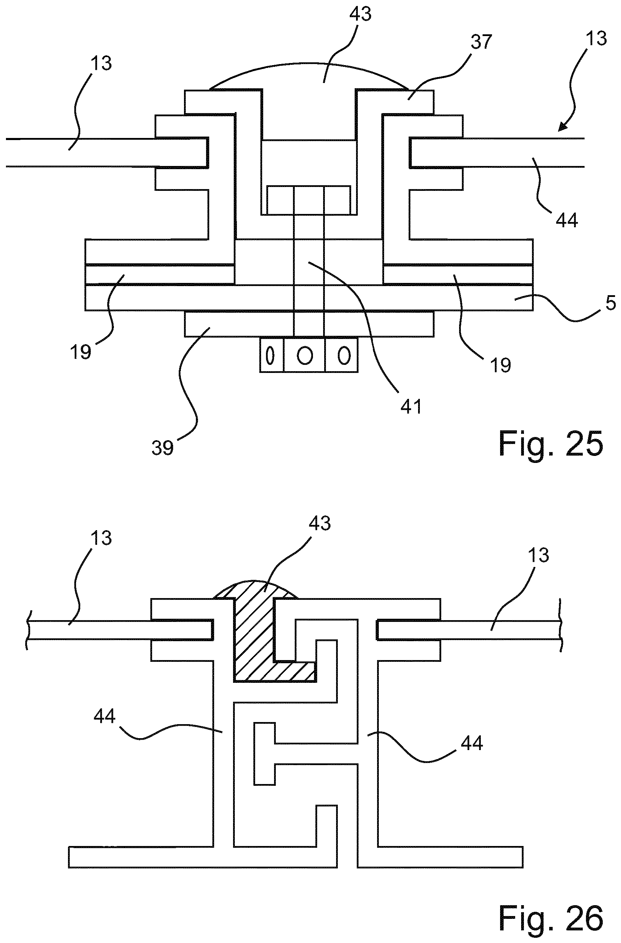

Das in Figur 25 dargestellten Ausführungsbeispiel 1 zeigt eine Variante des in Figur 21 dargestellten Ausführungsbeispiels.

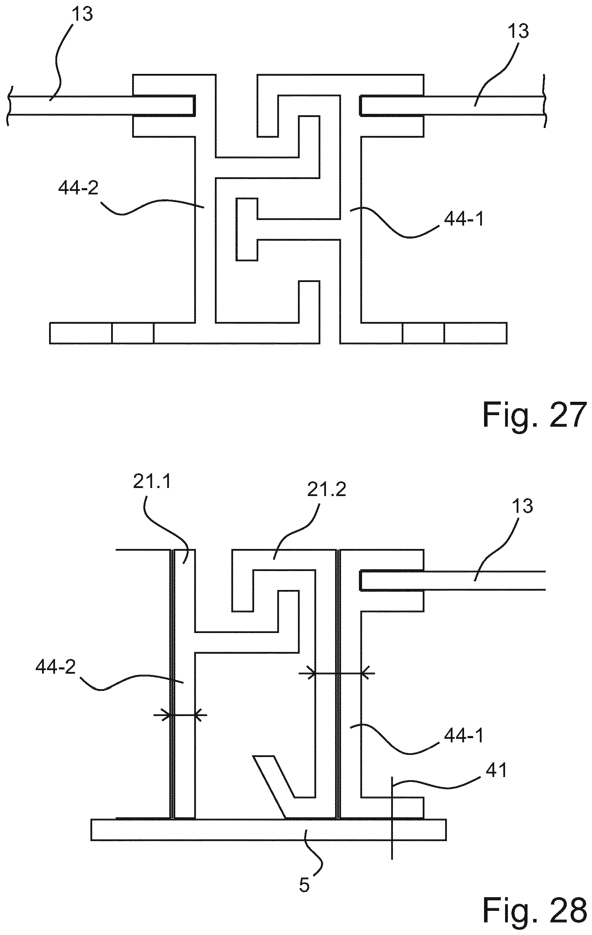

In den Figuren 26 und 27 sind weitere Varianten des in Figur 24 dargestellten Ausführungsbeispiels dargestellt. Die benachbarten Rahmen 44 weisen auf den einander zugewandten Seiten "T"- und "L"-förmige Rippen auf. Dadurch werden die beiden Rahmen 44 miteinander verriegelt und es bilden sich (Regen-)Rinnen, welche Regenwasser abführen können. In der Figur 26 ist eine Dichtleiste 43 vorgesehen, welche das Eindringen von Regenwasser verhindert.

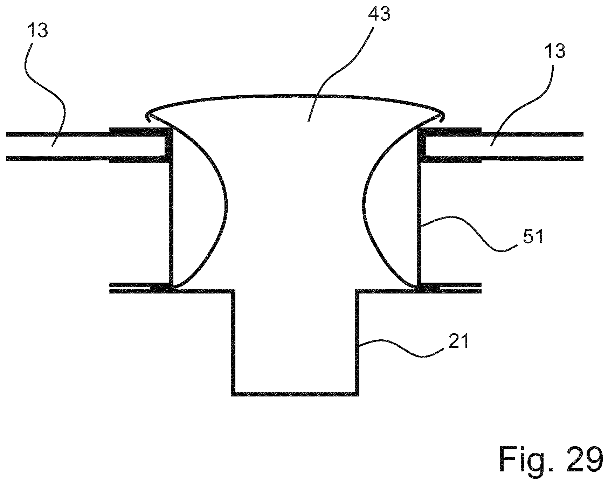

In den Figuren 28 und 29 sind die "L"-förmigen Rippen in gesonderten Schienen 21. und 21.2 ausgebildet, die wiederum zwischen den Rahmen 44 angeordnet sind.

In der Figur 29 ist die als Hutprofil ausgebildete Regenrinne 21 unterhalb der Befestigungsschienen 51 angeordnet.

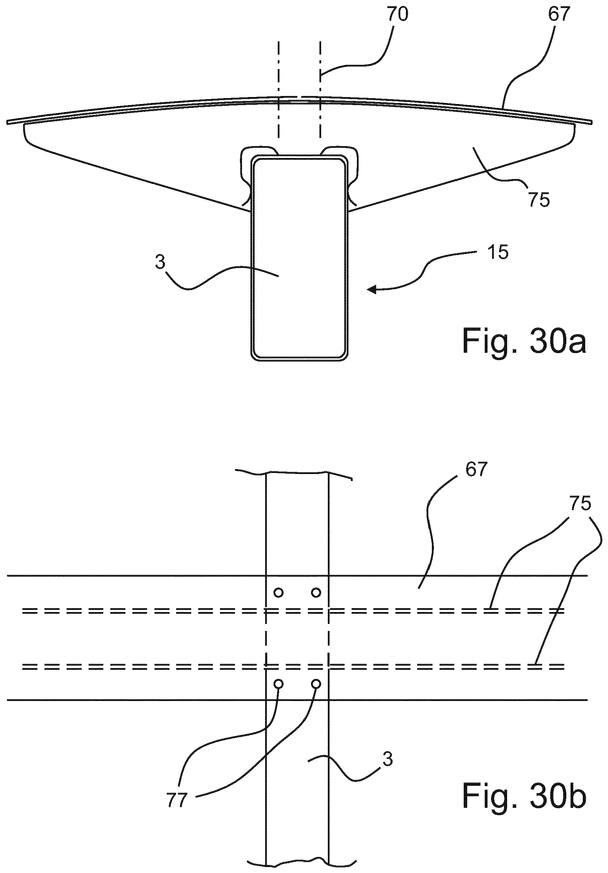

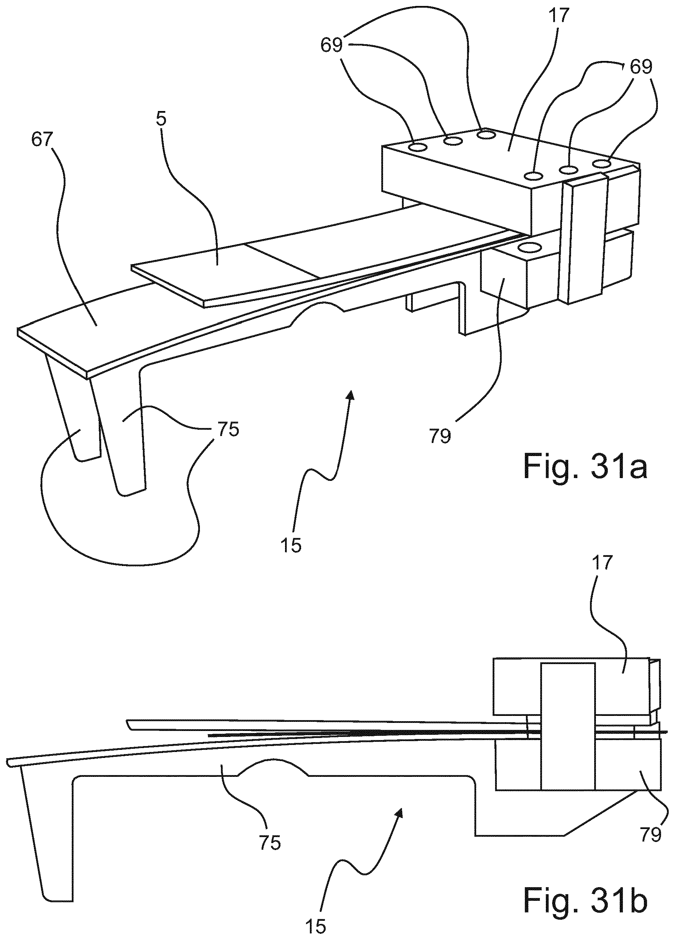

In den Figuren 30a und 30b ist ein weiteres Ausführungsbeispiel eines erfindungsgemäßen Sattelstücks 15 in zwei Ansichten dargestellt. In der Figur 31a ist eine Seitenansicht dargestellt, während die Figur 31b eine Ansicht von oben darstellt.

Bei diesem Ausführungsbeispiel ist die Traverse 3 als Hohlprofil, nämlich als Rechteckrohr, ausgebildet. An der Oberseite der Traverse 3 sind zwei Rippen 75 aufgesetzt und angeschweißt. Die Oberseiten der Rippen 75 sind gekrümmt und tragen eine Auflage 67, die ebenfalls gekrümmt ist. Dieses Sattelstück 15 wird bevorzugt als Schweißkonstruktion ausgebildet.

Aus der Ansicht von oben (Figur 30b) ist sichtbar, dass die Rippen 75 einen gewissen Abstand zueinander aufweisen und dass die Auflage 67 Durchbrüche 77 aufweist. Der Abstand der Durchbrüche 77 ist größer als die Breite des Spannbands 5. Das Spannband 5 (nicht dargestellt in den Figuren 30a und 30b) wird zwischen den Durchbrüchen 77 auf die Auflage 67 gelegt. Anschließend wird, ähnlich wie bei den Ausführungsbeispielen gemäß Figur 9 und 10, ein Gegenstück 17 aufgelegt und das Gegenstück 17 mithilfe von Klemmschrauben 69, die durch die Durchbrüche 77 gesteckt werden, gegen die Auflage 67 gepresst. Da entsteht eine reibschlüssige Verbindung zwischen Spannband 5 und dem Sattelstück 15 bzw. der Traverse 3.

Die Figuren 31a und 31b zeigen ein weiteres Ausführungsbeispiel eines erfindungsgemäßen Sattelstücks 15, das als Schweißkonstruktion ausgeführt ist. Das Sattelstück 15 umfasst zwei Rippen 75 und eine Auflage 67. Es ist sehr ähnlich wie das Ausführungsbeispiel gemäß Figur 31 ausgebildet. Der wesentliche Unterschied besteht darin, dass in dem in Figur 31a und 31b rechten Bereich der Rippen 75 eine Grundplatte 79 angeordnet ist. Diese Grundplatte 79 ragt zu beiden Seiten über die Auflage 67 hinaus. In der massiv ausgeführten Grundplatte 79 können Gewindebohrungen oder Durchbrüche vorgesehen sein, die zusammen mit einem Gegenstück 17 und den Klemmschrauben 69 eine reibschlüssige Verbindung zwischen Spannband 5 und dem Sattelstück 15 bzw. der Traverse 3 herstellen.

Bei diesem Ausführungsbeispiel können durch die Wahl geeigneter Materialdicken und Geometrien die an den verschiedenen Orten erforderlichen Festigkeiten und Belastbarkeiten konstruktiv vorgegeben werden. Insbesondere die Grundplatte 79 kann sehr massiv ausgeführt werden, so dass sehr hohe Klemmkräfte zwischen dem Gegenstück 17 und der Grundplatte 79 erreichbar sind.

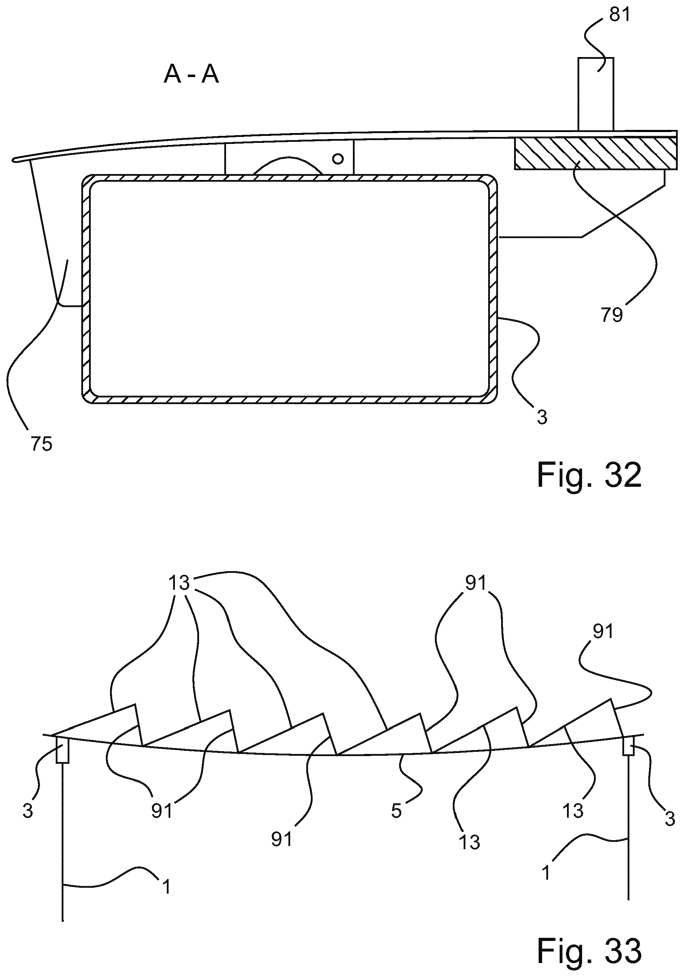

In der Figur 32 ist eine als Vierkantrohr ausgeführte Traverse 3 im Schnitt mit angeschweißtem Sattelstück 15 gemäß der Figuren 31a und 31b dargestellt.

Die Figur 33 zeigt ein Ausführungsbeispiel einer Tragstruktur mit aufgeständerten PV-Modulen 13. Durch das Aufständern kann die Ausrichtung der PV-Module 13 zur Sonne verbessert und dadurch der Ertrag gesteigert werden.

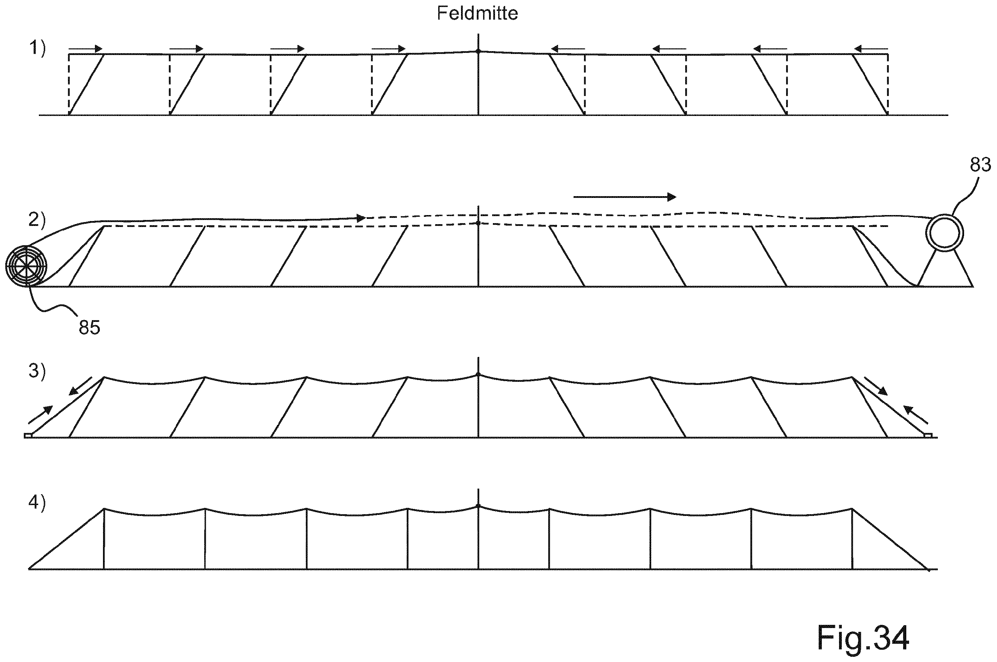

In der Figur 34 ist das Aufstellen einer erfindungsgemäßen Tragstruktur in vier Schritten dargestellt. In dem ersten Schritt (Schritt 1) ist nur die mittlere Reihe der Stützen 1 vertikal ausgerichtet. Die benachbarten Stützen 1 sind mit zunehmendem Abstand zu der mittleren Stütze 1 immer schräger angeordnet. Die am weitesten außen befindlichen Stützen 1 stehen am schrägsten.

In einem zweiten Schritt (Schritt 2)) ist nun angedeutet, wie mit Hilfe einer Winde 83 von einer Haspel 85 oder Rolle das Spannband 5 über die Stützen 1 bzw. die Traversen 3 gezogen wird.

In der Figur 34.3 (Schritt 3)) ist die noch nicht vorgespannte Tragstruktur dargestellt und es ist durch die Pfeile angedeutet, dass die Zugmittel 11 nun verkürzt werden, so dass sich die Stützen ausrichten und das Spannband 5 die gewünschte Vorspannung erhält.

In der Figur 34.4 ist die fertig aufgestellte Tragstruktur dargestellt. Alle Stützen 1 sind vertikal ausgerichtet, die Spannbänder 5 haben die gewünschte Vorspannung und die Vorspannkraft wird über die Zugmittel 11 in die in Figur 31 nicht dargestellten Fundamente abgeleitet.

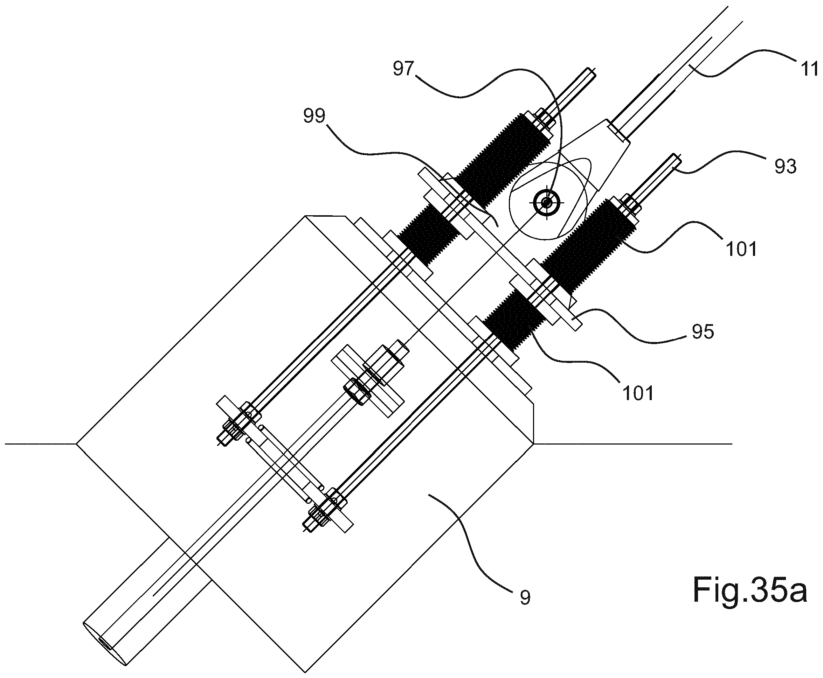

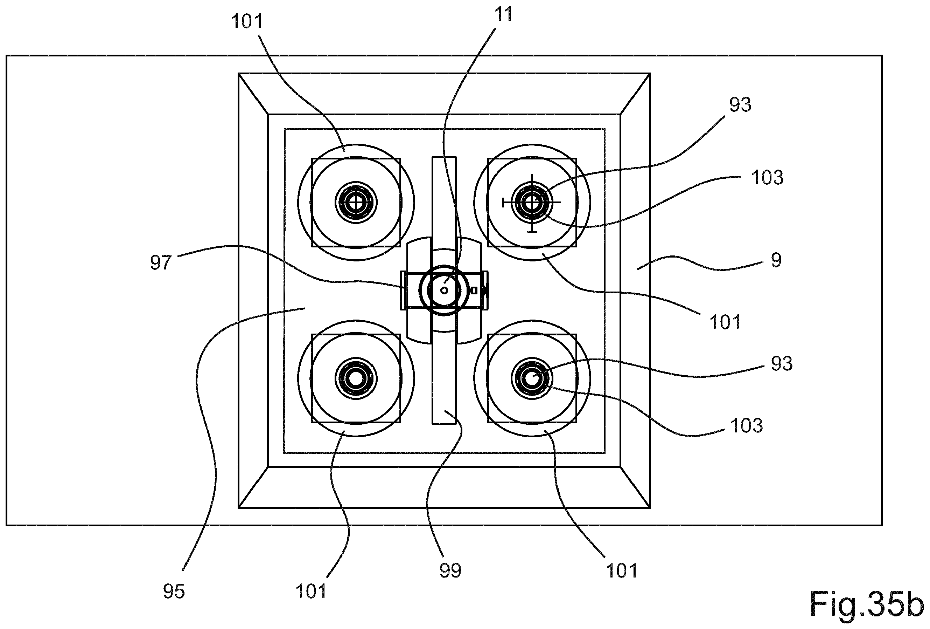

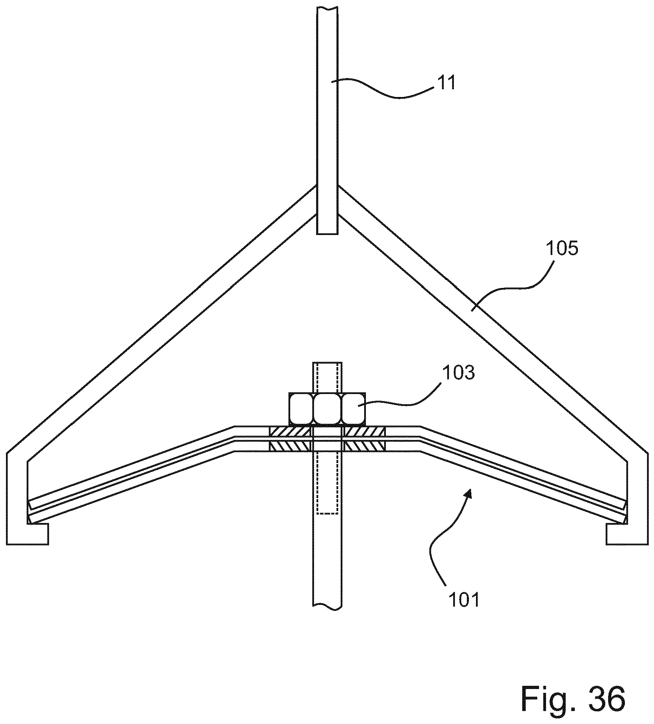

Bei den in den Figur 35a, 35b und 36 dargestellten Ausführungsbeispielen sind zwischen dem Fundament 9 und dem Zugmittel 11 eine oder mehrere Federn angeordnet; bevorzugt sind es Tellerfederpakete.

Bei dem in der Figur 35a und 35b dargestellten Ausführungsbeispiel sind es 2 x 4 Tellerfederpakete 101.

In dem Fundament 9 sind mehre Gewindestangen 93 angeordnet.

Auf diese Gewindestangen 93 wird eine Lastverteilungsplatte 95 aufgeschoben. Zu diesem Zweck sind in der Lastverteilungsplatte 95 Durchgangslöcher (ohne Bezugszeichen) ausgespart. Die Lastverteilungsplatte 95 kann sich entlang der Gewindestangen 93 relativ zu dem Fundament 9 bewegen.

An der Lastverteilungsplatte 95 ist das Zugmittel 11 eingehängt. Das kann mit Hilfe eines Bolzens 97 geschehen, der in eine Flanschplatte 99 gesteckt wird, die wiederum mit der Lastverteilungsplatte 95 verschweißt ist.

Auf die Gewindestangen 93 sind die bereits erwähnten Tellerfederpakte 101 aufgeschoben. Bei dem dargestellten Ausführungsbeispiel ist auf jeder Gewindestange 93 unterhalb und oberhalb der Lastverteilungsplatte 95 jeweils ein Tellerfederpaket 101 angeordnet. Anschließend werden Muttern 103 auf die Gewindestangen 93 aufgedreht. Durch Anziehen der Muttern 103 werden die Tellerfederpakete 101 und das Zugmittel 11 vorgespannt.

Durch die Anordnung von Tellerfedern unterhalb und oberhalb der Lastverteilungsplatte 95 an dem die Abspannung bzw. das Zugmittel 11 befestigt ist können die Tellerfederpakete 101 in beide Richtungen arbeiten.

D.h. bei höherer Last (hohe Last durch Schnee und Wind) drücken sich die oberhalb der Lastverteilungsplatte 95 angeordneten Federn zusammen, so dass die Abspannung etwas nachgeben kann. Alle Stützen 1 neigen sich nach Innen und der Durchhang der Spannbänder 5 vergrößert sich. Dadurch die Zunahme der auf die Stützen 1 und deren Fundamente wirkenden Kräfte verringert oder kann sogar konstant gehalten werden; trotz der erhöhten Lasten.

Im Falle von Windsoglasten wird ein Abfall der Vorspannung verhindert. Die Tellerfedern oberhalb der Lastverteilungsplatte 95 längen sich, d.h**.** die Stützen 1 werden nach außen gezogen und die Spannbänder 5 bleiben noch vorgespannt; es kommt nicht zu einem stoßartigen Durchschlagen der Spannbänder 5 durch die Nulllage, sondern zu einem statischen /"sanften" Durchgang in den nach oben gekrümmten Bereich der Schwingungsamplitude.

Die Federraten der Tellerfederpakete 101 unterhalb und oberhalb der Lastverteilungsplatte 95 können gleich sein. Es kann aber auch vorteilhaft sein, wenn die Federraten der Tellerfederpakete 101 unterhalb und oberhalb der Lastverteilungsplatte 95 unterschiedlich sind. Zum Beispiel kann diese Maßnahme das Schwingungsverhalten der PV-Anlage positiv beeinflussen. Das heißt die Amplituden werden reduziert.

In jedem Fall ist sicherzustellen, dass die Lastverteilungsplatte 95 und das Fundament 9 sich zu keinem Zeitpunkt nicht berühren.

Es kann auch vorteilhaft sein, den Weg der Anschlagplatte 95 in eine oder in beide Richtungen zu begrenzen. Damit werden zu große Verformungen z.B**.** durch Windreibung und eine damit einhergehende zu große "Schiefstellung" der Stützen 1 zu verhindern.

Kurz gesagt: Durch den Einsatz der Tellerfederpakete 101 kann die Vorspannung des Spannbänder 5 reduziert werden. Trotzdem ist gewährleistet, dass die die Spannbänder 5 zu jedem Zeitpunkt und an jedem Ort vorgespannt sind; auch wenn die Spannbänder 5 durch Wind zu Schwingungen angeregt werden. Dadurch wird die Belastung vor allem der Spannbänder 5, aber auch der anderen Komponenten der PV-Anlage, reduziert und es kann ein größerer Durchhang der Spannbänder 5 zwischen den Traversen 3 zugelassen werden.

In der Figur 36 ist eine weitere Ausführungsform mit nur einem Tellerfederpaket 101 dargestellt. Bei dieser Ausführungsform wird ein Tellerfederpaket 101 auf die Gewindestange 103 aufgeschoben.

Das untere Ende des Zugmittels 11 ist über einen Bügel 105 an dem Tellerfederpaket 101 eingehängt. Auch bei diesem Ausführungsbeispiel werden durch Anziehen der Mutter 103 das Tellerfederpaket 101 und das Zugmittel 11 vorgespannt.

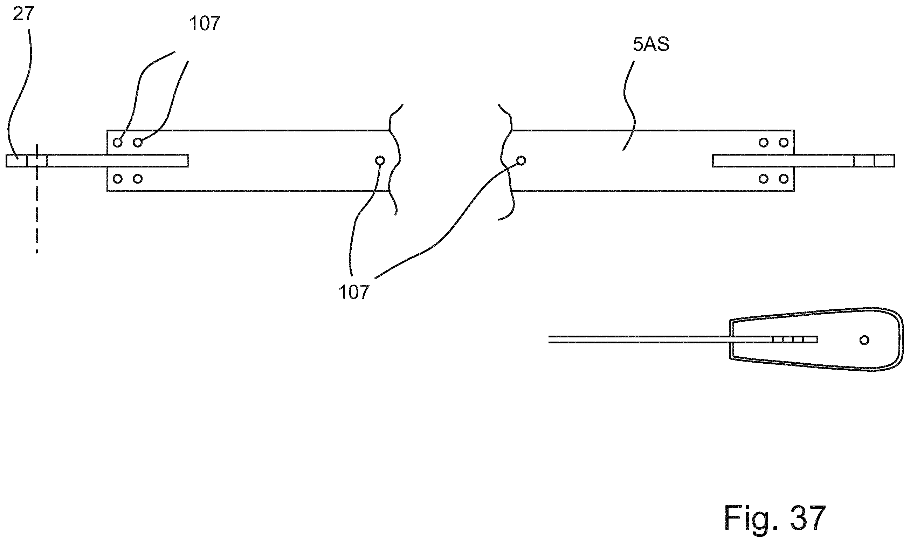

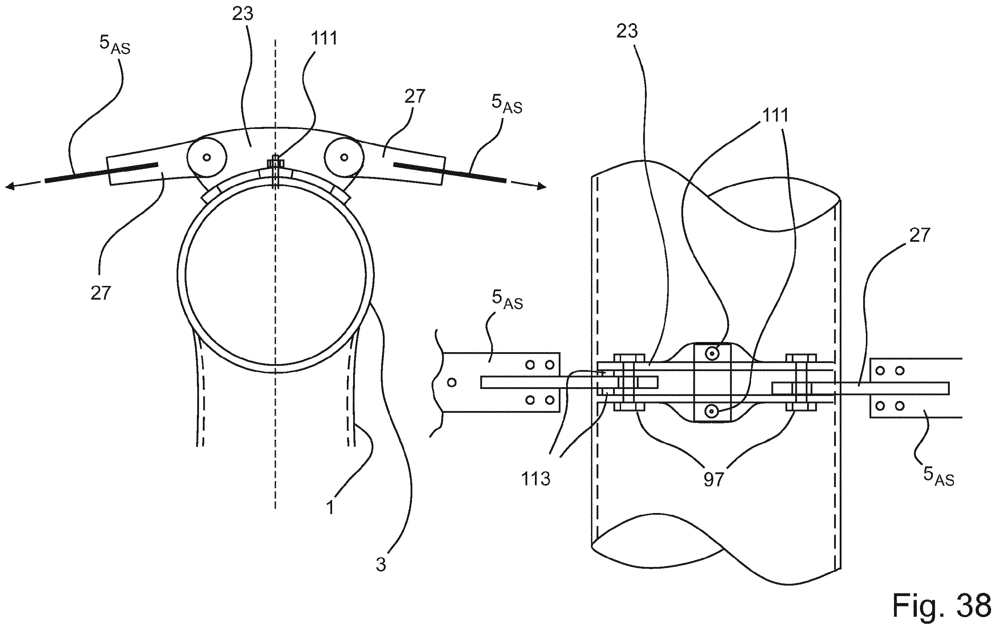

In den Figuren 37 und 38 sind Details einer weiteren Ausführungsform eines PV-Anlage dargestellt, bei der die Spannbänder 5 sich nicht von der ersten Traverse 3ₙ bis zur letzten Traverse 3ₙ erstrecken. Diese Ausführungsform wurde in der deutschen Erstanmeldung DE 10 2021 111 106.4 in den Figuren 8 und 9 dargestellt und erläutert.

Bei diesem Ausführungsbeispiel besteht jedes Spannband 5 aus mehreren Spannband-Abschnitten 5_{AS}. Die Länge eines Spannband-Abschnitts entspricht in etwa dem Abstand zwischen zwei benachbarten Traversen 3. Dies bedeutet, dass an der Traverse 3, die in der Figur 38 als Rohr mit kreisförmigem Querschnitt ausgebildet ist, ein Befestigungsstück 23 montiert ist, das zwei Bohrungen aufweist. Die Befestigungsstücke 23 sind an der Traverse 3 mit Schrauben 111 oder Schweißbolzen befestigt.

An den Enden der Spannbandabschnitte 5_{AS} ist bei diesem Ausführungsbeispiel ein Zwischenstück 27 vorgesehen, das ebenfalls eine Bohrung aufweist. Durch diese Bohrungen kann zum Beispiel ein Bolzen oder eine Schraube gesteckt werden und auf diese Weise zwei Spannbandabschnitte 5AS an einer Traverse 3 befestigt werden. Durch diese Kopplung werden mehrere Spannbandabschnitte 5AS zu einem durchgehenden Spannband 5 verbunden. In der Draufsicht der Figur 38 kommen Schrauben (ohne Bezugszeichen) zum Einsatz. Sie werden durch Muttern gesichert.

Zwischen dem Befestigungsstück 23 und dem Zwischenstück 27 können auf den Schrauben Distanzhülsen 113 angeordnet sein, um einen direkten Kontakt zwischen dem Befestigungsstück 23 und dem Zwischenstück 27 zu vermeiden.

Es ist aber auch möglich, auf das Zwischenstück 27 zu verzichten, wenn das Befestigungsstück 23 entsprechend ausgeführt ist. Beispielsweise indem die Achsen der Bohrungen im Befestigungsstück 23 parallel zur Längsachse der Stütze 1 verlaufen. Dann kann ein Ende eines Spannband-Abschnitt 5_{AS} direkt mit einem Bolzen oder einer Schraube in diese Bohrung eingehängt bzw. mit dem Befestigungsstück 23 verspannt werden.

Das Befestigungsstück 23 kann auch als ein stehendes Blech ausgeführt sein, welches an die Traverse 3 geschweißt ist.

### Bezugszeichenliste:

1 Stütze
3 Traverse; "n" Zahl der Traversen
5 Spannband; "m" Zahl der Spannbänder
7 Kreuzungspunkt
9 Fundament
11 Zugmittel
13 PV-Modul
15 Sattelstück
17 Gegenstück
19 Dichtprofil/Dichtleiste, flexibel z. B. aus EPDM
21 Regenrinne, flexibel z. B. aus EPDM
23 Befestigungsstück
27 Verbindungsstück
29 Handloch
31 Gegenstück
33 Schraube
35, 35-1, 35-2 Klemmelement
37 oberes Klemmstück
39 unteres Klemmstück
41 Spannschraube
43 Dichtleiste
44 Aluminium Modulrahmen eines PV-Moduls
44-1 / 44-2 PV-Rahmen mit T- und L-förmigen Rippen.
44-3 / 44-4 Zusätzliche Abdichtung
45 Fuß
47 Druckstück
49 Nachgiebiges Element
50 Nut
60 Verbindungsstück
61 Blechlasche
62 Splint, Stift oder Schraube
63 Langloch
64 Befestigungsbohrung
65 Trapezblech
67 Auflage
69 Klemmschraube
70 Lastverteilungsplatte
71 Biegeteil
73 strichpunktierte Linie
75 Rippe
77 Durchbruch
79 Grundplatte
81 Anschlag
83 Winde
85 Haspel
87 Dichtleiste
93 Gewindestange
95 Lastverteilungsplatte
97 Bolzen
99 Flanschplatte
101 Tellerfederpaket
103 Mutter
105 Bügel
111 Befestigungsschraube
113 Distanzhülse

## Patentansprüche

1. Tragstruktur für Photovoltaik-Module umfassend mehrere nebeneinander verlaufende Reihen von Stützen (1) und mehrere nebeneinander verlaufende Spannbänder (5), wobei die Stützen (1) einer Reihe durch eine Traverse (3) miteinander verbunden sind, wobei die Spannbänder (5) quer zu den Traversen (3) verlaufen und wobei an den Spannbändern (5) Photovoltaik-Module angeordnet sind, und wobei die Spannbänder (5) an den Kreuzungspunkten (7) von einer Traverse (3) und einem Spannband (5) an der Traverse (3) mittels einer Schraubverbindung oder einer Klemmverbindung befestigt sind, **dadurch gekennzeichnet, dass** die Spannbänder (5) aus Stahlblech bestehen.

2. Tragstruktur nach Anspruch 1, **dadurch gekennzeichnet, dass** in den Spannbändern (5) Durchbrüche vorhanden sind, um PV-Module (13) an dem Spannband (5) zu befestigen und/oder die Spannbänder (5) an den Kreuzungspunkten (7) von einer Traverse (3) und einem Spannband (5) an der Traverse (3) zu befestigen.

3. Tragstruktur nach einem der Ansprüche 1 oder 2, **dadurch gekennzeichnet, dass** mindestens an den Kreuzungspunkten (7) einer Traverse (3) und eines Spannbands (5) die Oberseite der Traverse (3) konvex gekrümmt ist und das Spannband (5) auf der gekrümmten Oberseite der Traverse (3) aufliegt.

4. Tragstruktur nach einem der Ansprüche 1 oder 2, **dadurch gekennzeichnet, dass** das Spannband (5) unterhalb der Traverse (3) verläuft und in den Kreuzungspunkten (7) mit einer Traverse (3) verbunden ist.

5. Tragstruktur nach Anspruch 3 oder 4, **dadurch gekennzeichnet, dass** die Spannbänder (5) an den Kreuzungspunkten (7) mit der Traverse (3) kraftschlüssig oder formschlüssig verbunden sind.

6. Tragstruktur nach einem der vorhergehenden Ansprüche, **dadurch gekennzeichnet, dass** ein Spannband (5) aus mehreren Spannband-Abschnitten (5_{AS}) zusammengesetzt ist, und dass ein Spannband-Abschnitt (5_{AS}) zwischen zwei Traversen (3) befestigt ist.

7. Tragstruktur nach einem der vorhergehenden Ansprüche, **dadurch gekennzeichnet, dass** jedes Spannband (5) an einer ersten Traverse (3₁) beginnt und an einer letzten Traverse (3ₙ) endet, und dass die Spannbänder (5) mit einer Vorspannung zwischen der ersten Traverse (3₁) und der letzten Traverse (3ₙ) montiert sind.

8. Tragstruktur nach Anspruch 7, **dadurch gekennzeichnet, dass** die Dehnung der vorgespannten Spannbänder (5) so groß ist, dass die Spannbänder (5) auch bei windinduzierten Schwingungen immer vorgespannt sind, selbst beim Nulldurchgang einer Schwingung, auch im Falle eines "Durchschlagens", also wenn sie nicht als Bogen durchhängen, sondern wenn sie dynamisch perfekt horizontal angeordnet sind, also die kürzeste Verbindung zwischen zwei benachbarten Auflagerpunkten "einnehmen".

9. Tragstruktur nach einem der vorhergehenden Ansprüche, **dadurch gekennzeichnet, dass** sie mindestens zwei Fundamente (9.1 , 9.2) aufweist, dass ein erstes Fundament (9.1) neben der ersten Traverse (3₁) verläuft, dass ein zweites Fundament (9.2) neben der letzten Traverse (3ₙ) verläuft, dass zwischen dem ersten Fundament (9.1) und der ersten Traverse (3₁) sowie dem zweiten Fundament (9.2) und der letzten Traverse (3ₙ) Zugmittel (11) vorgesehen sind, welche die von den Spannbändern (5) in die erste Traverse (3₁) und die letzte Traverse (3ₙ) eingeleitete Vorspannung in die Fundamente (9.1, 9.2) ableiten.

10. Tragstruktur nach einem der vorhergehenden Ansprüche, **dadurch gekennzeichnet, dass** die Traversen (3) aus einem Breitflansch-Träger, einem Hohlprofil, insbesondere einem Stahlrohr, oder aus Holz, insbesondere aus Konstruktions-Vollholz, mit runden oder polygonalem Querschnitt bestehen.

11. Tragstruktur nach einem der vorhergehenden Ansprüche, **dadurch gekennzeichnet, dass** die Oberseiten der Traversen (3) gekrümmt sind und ein Auflager für die Spannbänder (5) bilden.

12. Tragstruktur nach einem der Ansprüche 3 bis 11, **dadurch gekennzeichnet, dass** an den Kreuzungspunkten (7) ein Sattelstück (15) für ein Spannband (5) vorgesehen ist, und dass die Sattelstücke (15) mit den Traversen (3) verbunden sind**.**

13. Tragstruktur nach Anspruch 12, **dadurch gekennzeichnet, dass** jedes Sattelstück (15) eine gekrümmte Auflage (67) und ein Gegenstück (17) aufweist, dass das Spannband (5) zwischen der Auflage (67) und dem Gegenstück (17) hindurchgeführt ist, und dass das Gegenstück (17) mittels Klemmschrauben (69) gegen die Auflage (67) gepresst wird**.**

14. Tragstruktur nach einem der Ansprüche 12 oder 13, **dadurch gekennzeichnet, dass** die Sattelstücke (15) eine oder zwei Rippen (75) umfassen, dass die Auflage (67) an der oder den Rippen (75) befestigt ist, und dass unterhalb der Auflage (67) eine Grundplatte (79) an der oder den Rippen (75) angeordnet ist, und dass die Grundplatte (79) Durchbrüche oder Gewindebohrungen aufweist, die mit den Klemmschrauben (69) zusammenwirken.

15. Tragstruktur nach einem der vorhergehenden Ansprüche, **dadurch gekennzeichnet, dass** jedes PV-Modul (13) direkt oder mittelbar an zwei nebeneinander befindlichen Spannbändern (5) befestigt **ist.**

16. Tragstruktur nach Anspruch 15, **dadurch gekennzeichnet, dass** die PV-Module (13) einen Rahmen (44) umfassen, und dass die PV-Module (13) über den Rahmen (44) an zwei nebeneinander verlaufenden Spannbändern (5) befestigt sind.

17. Tragstruktur nach einem der vorhergehenden Ansprüche, **dadurch gekennzeichnet, dass** die PV-Module (13) aufgeständert an den Spannbändern (5) befestigt sind.

18. Tragstruktur nach einem der vorhergehenden Ansprüche, **dadurch gekennzeichnet, dass** zwischen zwei nebeneinander angeordneten PV-Modulen (13) oder zwei nebeneinander angeordneten Reihen von PV-Modulen (13) eine Dichtleiste (19, 43) vorgesehen ist.

19. Tragstruktur nach einem der vorhergehenden Ansprüche, **dadurch gekennzeichnet, dass** zwischen den Spannbändern (5) und den PV-Modulen (13) ein Trapezblech (65) vorgesehen ist.

20. Tragstruktur nach einem der Ansprüche 9 bis 19, **dadurch gekennzeichnet, dass** zwischen einem Zugmittel (11) und einem Fundament (9) mindestens ein Tellerfederpaket (101) angeordnet ist.

## Claims

1. Support structure for photovoltaic modules, comprising a plurality of rows of pillars (1) extending next to one another and a plurality of tensioning straps (5) extending next to one another, the pillars (1) of a row being connected to one another by a cross-member (3), the tensioning straps (5) extending transversely to the cross-members (3) and photovoltaic modules being arranged on the tensioning straps (5), and the tensioning straps (5) being fastened to the cross-member (3) at the intersection points (7) of a cross-member (3) and a tensioning strap (5), by means of a screw connection or a clamp connection, **characterized in that** the tensioning straps (5) consist of sheet steel.

2. Support structure according to claim 1, **characterized in that** openings are provided in the tensioning straps (5) in order to fasten PV modules (13) to the tensioning strap (5) and/or to fasten the tensioning straps (5) to the cross-member (3) at the intersection points (7) of a cross-member (3) and a tensioning strap (5).

3. Support structure according to any of claims 1 or 2, **characterized in that**, at least at the intersection points (7) of a cross-member (3) and a tensioning strap (5), the upper face of the cross-member (3) is convexly curved and the tensioning strap (5) rests on the curved upper face of the cross-member (3).

4. Support structure according to any of claims 1 or 2, **characterized in that** the tensioning strap (5) extends below the cross-member (3) and is connected to a cross-member (3) at the intersection points (7).

5. Support structure according to claim 3 or claim 4, **characterized in that** the tensioning straps (5) are connected to the cross-member (3) at the intersection points (7) in a force-fitting or form-fitting manner.

6. Support structure according to any of the preceding claims, **characterized in that** a tensioning strap (5) is composed of a plurality of tensioning strap portions (5_{AS}), and **in that** a tensioning strap portion (5_{AS}) is fastened between two cross-members (3).

7. Support structure according to any of the preceding claims, **characterized in that** each tensioning strap (5) begins at a first cross-member (3₁) and ends at a last cross-member (3ₙ), and **in that** the tensioning straps (5) are mounted with pretensioning between the first cross-member (3₁) and the last cross-member (3ₙ).

8. Support structure according to claim 7, **characterized in that** the elongation of the pretensioned tensioning straps (5) is so great that the tensioning straps (5) are always pretensioned, even in the case of wind-induced vibrations, even when a vibration passes through zero, even in the case that they "cut-through", i.e. if they do not sag in an arc but if they are dynamically arranged perfectly horizontally, i.e. if they "occupy" the shortest connection between two adjacent support points.

9. Support structure according to any of the preceding claims, **characterized in that** it has at least two footings (9.1, 9.2), **in that** a first footing (9.1) extends next to the first cross-member (3₁), **in that** a second footing (9.2) extends next to the last cross-member (3ₙ), **in that**, between the first footing (9.1) and the first cross-member (3₁), and between the second footing (9.2) and the last cross-member (3ₙ), tension means (11) are provided which transfer the pretensioning, which was introduced into the first cross-member (3₁) and the last cross-member (3ₙ) by the tensioning straps (5), into the footings (9.1, 9.2).

10. Support structure according to any of the preceding claims, **characterized in that** the cross-members (3) consist of a wide flange beam, a hollow profile, in particular a steel pipe, or consist of wood, in particular of solid structural wood, having a round or polygonal cross section.

11. Support structure according to any of the preceding claims, **characterized in that** the upper faces of the cross-members (3) are curved and form a support for the tensioning straps (5).

12. Support structure according to any of claims 3 to 11, **characterized in that** at the intersection points (7), a saddle piece (15) is provided for a tensioning strap (5),and **in that** the saddle pieces (15) are connected to the cross-members (3).

13. Support structure according to claim 12, **characterized in that** each saddle piece (15) has a curved support (67) and a counterpart (17), **in that** the tensioning strap (5) is passed through between the support (67) and the counterpart (17), and **in that** the counterpart (17) is pressed against the support (67) by means of clamping screws (69).

14. Support structure according to claim 12 or claim 13, **characterized in that** the saddle pieces (15) comprise one or two ribs (75), **in that** the support (67) is fastened to the rib(s) (75), and **in that**, below the support (67), a base plate (79) is arranged on the rib(s) (75), and **in that** the base plate (79) has openings or threaded holes which interact with the clamping screws (69).

15. Support structure according to any of the preceding claims, **characterized in that** each PV module (13) is fastened directly or indirectly to two tensioning straps (5) located next to one another.

16. Support structure according to claim 15, **characterized in that** the PV modules (13) comprise a frame (44), and **in that** the PV modules (13) are fastened, via the frame (44), to two tensioning straps (5) extending next to one another.

17. Support structure according to any of the preceding claims, **characterized in that** the PV modules (13) are fastened to the tensioning straps (5) in an elevated manner.

18. Support structure according to any of the preceding claims, **characterized in that** a sealing strip (19, 43) is provided between two PV modules (13) arranged next to one another or between two rows of PV modules (13) arranged next to one another.

19. Support structure according to any of the preceding claims, **characterized in that** a trapezoidal metal sheet (65) is provided between the tensioning straps (5) and the PV modules (13).

20. Support structure according to any of claims 9 to 19, **characterized in that** at least one disc spring assembly (101) is arranged between a tension means (11) and a footing (9).

## Revendications

1. Structure porteuse pour modules photovoltaïques comprenant plusieurs rangées de supports (1) s'étendant les unes à côté des autres et plusieurs bandes de serrage (5) s'étendant les unes à côté des autres, dans laquelle les supports (1) d'une rangée sont reliés entre eux par une traverse (3), dans laquelle les bandes de serrage (5) s'étendent transversalement aux traverses (3) et dans laquelle des modules photovoltaïques sont disposés sur les bandes de serrage (5), et dans laquelle les bandes de serrage (5) sont fixées sur la traverse (3) aux points d'intersection (7) d'une traverse (3) et d'une bande de serrage (5) au moyen d'une liaison par vis ou d'une liaison par serrage, **caractérisée en ce que** les bandes de serrage (5) sont constituées de tôle en acier.

2. Structure porteuse selon la revendication 1, **caractérisée en ce que** des passages sont prévus dans les bandes de serrage (5) pour fixer des modules PV (13) à la bande de serrage (5) et/ou pour fixer les bandes de serrage (5) à la traverse (3) aux points de croisement (7) d'une traverse (3) et d'une bande de serrage (5).

3. Structure porteuse selon l'une des revendications 1 ou 2, **caractérisée en ce que**, au moins aux points de croisement (7) d'une traverse (3) et d'une bande de serrage (5), la face supérieure de la traverse (3) est incurvée de manière convexe et la bande de serrage (5) repose sur la face supérieure incurvée de la traverse (3).

4. Structure porteuse selon l'une des revendications 1 ou 2, **caractérisée en ce que** la bande de serrage (5) s'étend en dessous de la traverse (3) et est reliée à une traverse (3) au niveau des points de croisement (7).

5. Structure porteuse selon la revendication 3 ou 4, **caractérisée en ce que** les bandes de serrage (5) sont reliées à la traverse (3) à force ou par complémentarité de forme au niveau des points de croisement (7).

6. Structure porteuse selon l'une des revendications précédentes, **caractérisée en ce qu'**une bande de serrage (5) est composée de plusieurs sections de bande de serrage (5_{AS}), et **en ce qu'**une section de bande de serrage (5_{AS}) est fixée entre deux traverses (3).

7. Structure porteuse selon l'une des revendications précédentes, **caractérisée en ce que** chaque bande de serrage (5) commence au niveau d'une première traverse (3₁) et se termine au niveau d'une dernière traverse (3ₙ), et **en ce que** les bandes de serrage (5) sont montées avec une précontrainte entre la première traverse (3₁) et la dernière traverse (3ₙ).

8. Structure porteuse selon la revendication 7, **caractérisée en ce que** l'allongement des bandes de serrage (5) précontraintes est tel que les bandes de serrage (5) sont toujours précontraintes, même en cas de vibrations induites par le vent, même au passage par zéro d'une vibration, même en cas de "percussion", c'est-à-dire lorsqu'elles ne s'affaissent pas sous forme d'arc, mais lorsqu'elles sont disposées dynamiquement de manière parfaitement horizontale, c'est-à-dire lorsqu'elles "prennent" la liaison la plus courte entre deux points d'appui voisins.

9. Structure porteuse selon l'une des revendications précédentes, **caractérisée en ce qu'**elle présente au moins deux fondations (9.1, 9.2), **en ce qu'**une première fondation (9.1) s'étend à côté de la première traverse (3₁), **en ce qu'**une seconde fondation (9.2) s'étend à côté de la dernière traverse (3ₙ), **en ce qu'**entre la première fondation (9.1) et la première traverse (3₁) ainsi qu'entre la seconde fondation (9.2) et la dernière traverse (3ₙ), des moyens de traction (11) sont prévus, lesquels dévient la précontrainte introduite par les bandes de serrage (5) dans la première traverse (3₁) et la dernière traverse (3) vers les fondations (9.1, 9.2).

10. Structure porteuse selon l'une des revendications précédentes, **caractérisée en ce que** les traverses (3) sont constituées d'une poutre à larges ailes, d'un profilé creux, en particulier d'un tube en acier, ou de bois, en particulier de bois massif de construction, de section transversale ronde ou polygonale.

11. Structure porteuse selon l'une des revendications précédentes, **caractérisée en ce que** les faces supérieures des traverses (3) sont incurvées et forment un appui pour les bandes de serrage (5).

12. Structure porteuse selon l'une des revendications 3 à 11, **caractérisée en ce qu'**un élément en forme de selle (15) pour une bande de serrage (5) est prévu aux points de croisement (7), et **en ce que** les éléments en forme de selle (15) sont reliés aux traverses (3).

13. Structure porteuse selon la revendication 12, **caractérisée en ce que** chaque élément en forme de selle (15) présente un appui incurvé (67) et un contre-élément (17), **en ce que** la bande de serrage (5) est passée entre le support (67) et le contre-élément (17), et **en ce que** le contre-élément (17) est pressé contre le support (67) au moyen de vis de serrage (69).

14. Structure porteuse selon l'une des revendications 12 ou 13, **caractérisée en ce que** les éléments en forme de selle (15) comprennent une ou deux nervures (75), **en ce que** l'appui (67) est fixé à la ou aux nervures (75), et **en ce qu'**une plaque de base (79) est disposée en dessous de l'appui (67) sur la ou les nervures (75), et **en ce que** la plaque de base (79) présente des traversées ou des trous taraudés qui coopèrent avec les vis de serrage (69).

15. Structure porteuse selon l'une des revendications précédentes, **caractérisée en ce que** chaque module PV (13) est fixé directement ou indirectement à deux bandes de serrage (5) situées l'une à côté de l'autre.

16. Structure porteuse selon la revendication 15, **caractérisée en ce que** les modules PV (13) comprennent un cadre (44), et **en ce que** les modules PV (13) sont fixés par l'intermédiaire du cadre (44) à deux bandes de serrage (5) s'étendant l'une à côté de l'autre.

17. Structure porteuse selon l'une des revendications précédentes, **caractérisée en ce que** les modules PV (13) sont fixés en surélévation sur les bandes de serrage (5).

18. Structure porteuse selon l'une des revendications précédentes, **caractérisée en ce qu'**une baguette d'étanchéité (19, 43) est prévue entre deux modules PV (13) disposés l'un à côté de l'autre ou deux rangées de modules PV (13) disposées l'une à côté de l'autre.

19. Structure porteuse selon l'une des revendications précédentes, **caractérisée en ce qu'**une tôle trapézoïdale (65) est prévue entre les bandes de serrage (5) et les modules PV (13).

20. Structure porteuse selon l'une des revendications 9 à 19, **caractérisée en ce qu'**au moins un paquet de rondelles Belleville (101) est disposé entre un moyen de traction (11) et une fondation (9).
